(19) **Europäisches Patentamt / European Patent Office / Office européen des brevets**

(11) **EP 2 897 304 A1**

(12) **EUROPEAN PATENT APPLICATION**

(43) Date of publication:
22.07.2015 Bulletin 2015/30

(51) Int Cl.:
*H04B 7/06* (2006.01)   *H04B 7/08* (2006.01)

(21) Application number: 14305078.9

(22) Date of filing: 21.01.2014

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventors:
• **Hoydis, Jakob**
  **75014 Paris (FR)**
• **Boccardi, Federico**
  **20063 Cernusco (Mi) (IT)**

• **Halbauer, Hardy**
  **70435 Stuttgart (DE)**
• **Baracca, Paolo**
  **70435 Stuttgart (DE)**

(74) Representative: **Hofmann, Dirk et al**
**Alcatel-Lucent Deutschland AG**
**Intellectual Property Business Group**
**Lorenzstrasse 10**
**70435 Stuttgart (DE)**

Remarks:
Amended claims in accordance with Rule 137(2) EPC.

(54) **Methods of a first and a second radio access network node for configuring micro wave radio frequency transmission between a first highly directional antenna and a second highly directional antenna, first radio access network node and second radio access network node thereof**

(57)   The embodiments of the invention relate to a first method of a first radio access network node (CBS) for configuring radio frequency transmission between a first highly directional antenna (A-CBS) and a second highly directional antenna (A-MS) of a second radio access network node (MS) in a first frequency range. The first method contains receiving second location information of a second location of said second highly directional antenna (A-MS) via a radio frequency transmission in a second frequency range with frequencies smaller than frequencies of said first frequency range or via a transmission technology different to the radio frequency transmission, determining first initial beam parameters for a first antenna pattern to be applied at the first highly directional antenna (A-CBS) and second initial beam parameters for a second antenna pattern to be applied at the second highly directional antenna (A-MS) based on the second location information and based on first location information of a first location of the first highly directional antenna (A-CBS), and transmitting information of the second initial beam parameters to the second radio access network node (MS) by a further radio frequency transmission via the second frequency range or by the transmission technology. The embodiments further relate to a second method of the second radio access network node (MS) for configuring the radio frequency transmission. The second method contains determining a location and an orientation of the first highly directional antenna or of the second highly directional antenna (A-MS), transmitting location information of the location by a radio frequency transmission via a second frequency range with frequencies smaller than frequencies of the first frequency range or via a transmission technology different to the radio frequency transmission, receiving by a further radio frequency transmission via the second frequency range or via the transmission technology information of initial beam parameters for a beam to be applied at the first highly directional antenna or at the second highly directional antenna (A-MS), and applying the initial beam parameters for the beam at the first highly directional antenna or at the second highly directional antenna (A-MS).

**(Cont. next page)**

FIG. 1

Description

## FIELD OF THE INVENTION

The present invention relates to radio frequency transmission in frequency ranges above 10 GHz and, more particularly but not exclusively, to radio frequency transmission in the millimetre wavelength range.

## BACKGROUND

This section introduces aspects that may be helpful in facilitating a better understanding of the invention. Accordingly, the statements of this section are to be read in this light and are not to be understood as admission about what is in the prior art.

The use of millimeter waves with frequencies between 20 and 300 GHz for wireless communications necessitates highly directional antennas to overcome a path loss between a transmitting antenna and a receiving antenna. Thus, both a transmitter which is connected to the transmitting antenna and a receiver which is connected to the receiving antenna must align their antenna beam patterns (or short "beams" in the following description) before a radio link can be established. Active antenna arrays allow steering the beams electronically within a wide range of possible directions. The optimal beam directions are often along a so-called LOS path (LOS = line-of-sight) if not blocked by an obstacle or along a strongest reflected path. However, the optimal beam directions are not known a priori and must be learned or detected similar to channel training for lower frequencies e.g. in conventional cellular mobile radio networks.

The current state-of-the-art consists of iterative training or beam-searching algorithms. These methods rely on iteratively testing of several candidate beams which are then gradually refined or narrowed. The biggest problem of such algorithms is a long convergence time which is often unacceptable for mobile communications.

## SUMMARY

Thus, an object of the embodiments of the invention is to provide a technical solution for setting up beams for millimetre waves in a fast way and also in a reliable way.

The object is achieved by a first method of a first radio access network node for configuring radio frequency transmission between a first highly directional antenna and a second highly directional antenna of a second radio access network node in a first frequency range. The first method contains receiving second location information of a second location of the second highly directional antenna by a radio frequency transmission in a second frequency range with frequencies smaller than frequencies of the first frequency range or by a transmission technology which is different to the radio frequency transmission. The first method further contains determining first initial beam parameters for a first antenna pattern to be applied at the first highly directional antenna and second initial beam parameters for a second antenna pattern to be applied at the second highly directional antenna based on the second location information and based on first location information of a first location of the first highly directional antenna. The first method even further contains transmitting information of the second initial beam parameters to the second radio access network node by a further radio frequency transmission in the second frequency range or by the transmission technology which is different to the radio frequency transmission.

The first frequency range may contain preferably frequencies equal to or above 10 GHz and the second frequency range may contain preferably frequencies below 10 GHz.

The object is further achieved by a first radio access network node for configuring radio frequency transmission between a first highly directional antenna and a second highly directional antenna of a second radio access network node in a first frequency range. The first radio access network node contains means for receiving second location information of a second location of the second highly directional antenna by a radio frequency transmission in a second frequency range with frequencies smaller than frequencies of the first frequency range or by a transmission technology different to the radio frequency transmission. The first radio access network node further contains means for determining first initial beam parameters for a first antenna pattern to be applied at the first highly directional antenna and second initial beam parameters for a second antenna pattern to be applied at the second highly directional antenna based on the second location information and based on first location information of a first location of the first highly directional antenna. The first radio access network node even further contains means for transmitting information of the second initial beam parameters to the second radio access network node by a further radio frequency transmission in the second frequency range or by the transmission technology.

The first radio access network node may be in a first alternative a base station which is adapted for radio frequency transmission in the first frequency range and for radio frequency transmission in the second frequency range. According to a second alternative, the first radio access network node may be a base station of a cellular mobile radio network which controls at least one base station which is dedicated for radio frequency transmission in the first frequency range. With respect to a third alternative, the first radio access network node may be a base station of a cellular mobile radio network which is connected to a further base station of the cellular mobile radio network via a wireless backhaul link which is based on the radio frequency transmission via the first frequency range.

In embodiments, the means for receiving the second location information may correspond to any receiver, transceiver, receiver unit, transceiver module etc. Hence, in embodiments the means for receiving the second location information may contain an input for received signals such as radio frequency signals which is modulated with the second location information, a pre-amplifier for the received signals, an algorithm, which extracts the second location information from the received signals, and an output for the second location information. In some embodiments the means for receiving the second location information can be implemented partly in terms of a computer program and a hardware component on which the computer program is executed, such as a DSP (DSP = Digital Signal Processor), an ASIC (ASIC = Application-Specific Integrated Circuit), an FPGA (FPGA = Field-Programmable Gate Array) or any other processor.

In embodiments, the means for determining the first initial beam parameters and the second initial beam parameters may correspond to any determination unit, determination module, etc. Hence, in embodiments the means for determining the first initial beam parameters and the second initial beam parameters may contain an input for the first location information and the second location information and preferably also for first orientation information of a first orientation of the first highly directional antenna and for second orientation information of a second orientation of the second highly directional antenna, an algorithm, which determines the first initial beam parameters and the second initial beam parameters using the first location information and the second location information and preferably the first orientation information and the second orientation information, and an output for the first initial beam parameters and the second initial beam parameters. In some embodiments the means for determining the first initial beam parameters and the second initial beam parameters can be implemented in terms of a computer program and a hardware component on which the computer program is executed, such as a DSP, an ASIC, an FPGA or any other processor.

In embodiments, the means for transmitting the information of the second initial beam parameters may correspond to any transmitter unit, transmitter module, transceiver unit, transceiver module etc. which contains a digital processing part and an analogue processing part with a power amplifier. Hence, in embodiments the means for transmitting the information of the second initial beam parameters may contain an input for the information of the second initial beam parameters, an algorithm which modulates a signal with the information of the second initial beam parameters and generates for example a radio frequency signal, a power amplifier which amplifies the radio frequency signal, and an output for the radio frequency signal. In some embodiments the means for transmitting the information of the second initial beam parameters can be partly implemented in terms of a computer program and a hardware component on which the computer program is executed, such as a DSP, an ASIC, an FPGA or any other processor.

Preferably, the means for receiving the second location information and the means for transmitting the information of the second initial beam parameters may be realized by a single transceiver unit, a duplexer, and a single antenna system.

The object is further achieved by a second method of a second radio access network node for configuring radio frequency transmission in a first frequency range between a first highly directional antenna and a second highly directional antenna. The second method contains determining a location and an orientation of a highly directional antenna, which is either the first highly directional antenna or the second highly directional antenna. The second method further contains transmitting location information of the location by a radio frequency transmission in a second frequency range with frequencies smaller than frequencies of the first frequency range or by a transmission technology different to the radio frequency transmission. The second method even further contains receiving by a further radio frequency transmission in the second frequency range or by the transmission technology information of initial beam parameters for an antenna pattern to be applied at the highly directional antenna and applying the initial beam parameters for the antenna pattern at the highly directional antenna.

The object is even further achieved by a second radio access network node for configuring radio frequency transmission in a first frequency range between a first highly directional antenna and a second highly directional antenna. The second radio access network node contains means for determining a location and an orientation of a highly directional antenna which is either the first highly directional antenna or the second highly directional antenna. The second radio access network node further contains means for transmitting location information of the location to a first radio access network node by a radio frequency transmission in a second frequency range with frequencies smaller than frequencies of the first frequency range or by a transmission technology different to the radio frequency transmission and for receiving information of initial beam parameters for an antenna pattern to be applied at the highly directional antenna by a further radio frequency transmission in the second frequency range or by the transmission technology. The second radio access network node even further contains means for applying the initial beam parameters for the beam at the highly directional antenna.

The second radio access network node may be in a first alternative a mobile station. In a further alternative, the second radio access network node may be a base station adapted for radio frequency transmission in the first frequency range and controlled by a further base station. In an even further alternative, the second radio access network node may be a base station of a cellular mobile radio network connected to a further base station via a wireless backhaul link which is based on the radio frequency transmission in the first frequency range.

In embodiments, the means for determining the second location and the second orientation may correspond to a combined measuring module with an electronic receiver of a satellite navigation system such as GPS (GPS = Global Positioning System) and with an orientation sensor for measuring angular rate, acceleration and geomagnetic fields preferably in three perpendicular axes or may correspond to an electronic receiver of a satellite navigation system as a first measuring device and to an orientation sensor as a second measuring device. Hence, in embodiments the means for determining the second location may contain an antenna and a receiver for several radio frequency signals received from several satellites of the satellite navigation system, an algorithm, which determines the second location based on the received several radio frequency signals, and an output for information about the second location. Hence, in embodiments the means for measuring the second orientation may contain for example a triaxial acceleration sensor, a triaxial gyroscope and a triaxial geomagnetic sensor, an algorithm, which determines the second orientation based on a movement from a previous orientation to a current orientation, and an output for information about the second orientation. In some embodiments the means for determining the second location and the second orientation can be implemented in terms of a computer program and a hardware component on which the computer program is executed, such as a DSP, an ASIC, an FPGA or any other processor.

In embodiments, the means for transmitting the location information may correspond to any transmitter unit, transmitter module, transceiver unit, transceiver module etc. which contains a digital processing part and an analogue processing part with a power amplifier. Hence, in embodiments the means for transmitting the location information may contain an input for the location information, an algorithm which modulates a signal with the location information and generates a radio frequency signal, a power amplifier which amplifies the radio frequency signal, and an output for the radio frequency signal. In some embodiments the means for transmitting the location information can be partly implemented in terms of a computer program and a hardware component on which the computer program is executed, such as a DSP, an ASIC, an FPGA or any other processor.

In embodiments, the means for receiving the information of the initial beam parameters may correspond to any receiver, transceiver, receiver unit, transceiver module etc. Hence, in embodiments the means for receiving the information of the initial beam parameters may contain an input for received signals such as radio frequency signals which is modulated with the information of the initial beam parameters, a pre-amplifier for the received signals, an algorithm, which extracts the information of the initial beam parameters from the received signals, and an output for the information of the initial beam parameters. In some embodiments the means for receiving the information of the initial beam parameters can be implemented partly in terms of a computer program and a hardware component on which the computer program is executed, such as a DSP, an ASIC, an FPGA or any other processor.

Preferably, the means for transmitting the location information and the means for receiving the information of the initial beam parameters may be realized by a single transceiver unit, a duplexer, and a single antenna system.

In embodiments, the means for applying the initial beam parameters may correspond to any processing unit, processing module, processing device etc. Hence, in embodiments the means for applying the initial beam parameters may contain an input for the initial beam parameters, an algorithm, which interprets the initial beam parameters to be used for driving/controlling the first or the second highly directional antenna, and an output for control commands for driving/controlling the first or the second highly directional antenna. In some embodiments the means for applying the initial beam parameters can be implemented in terms of a computer program and a hardware component on which the computer program is executed, such as a DSP, an ASIC, an FPGA or any other processor.

The embodiments exploits and leverage the availability of position sensors and orientation sensors in all modern mobile stations like smartphones and tablets to compute close to optimal beam directions without the need for beam training algorithms and beam searching algorithms. Same or similar position sensors and orientation sensors can be easily integrated with low cost into base stations or highly directional antennas connected to the base stations for radio frequency transmission for example in the millimeter wavelength range. Thereby, optimal coarse beam directions may be determined which may be refined or optimized by well known beam training algorithms for example when no LOS path is available.

This drastically shortens the time needed to set-up a millimeter wavelength communication link in comparison to existing iterative training algorithms. The embodiments provide also an advantage of enabling the use of millimeter wavelength for mobile communications.

In a preferred embodiment a database may store the optimal beam directions corresponding to current locations and orientations of the first highly directional antenna and the second highly directional antenna which can be queried for future use for accelerating and speeding up a beam alignment process at the first highly directional antenna and the second highly directional antenna.

Further advantageous features of the embodiments of the invention are defined in the dependent claims and are described in the following detailed description.

## BRIEF DESCRIPTION OF THE FIGURES

The embodiments of the invention will become apparent in the following detailed description and will be illustrated by accompanying figures given by way of non-limiting illustrations.

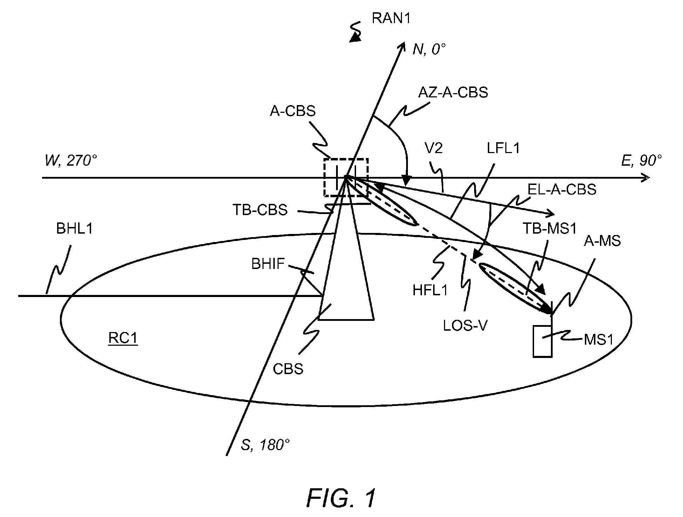

Figure 1 shows schematically a block diagram of a cellular radio access network which contains a base station and a mobile station, a first radio link between the base station and the mobile station using radio frequencies in a first frequency range and a second radio link between the base station and the mobile station using radio frequencies in a second frequency range which are smaller than the radio frequencies in the first frequency range according to a first exemplary embodiment.

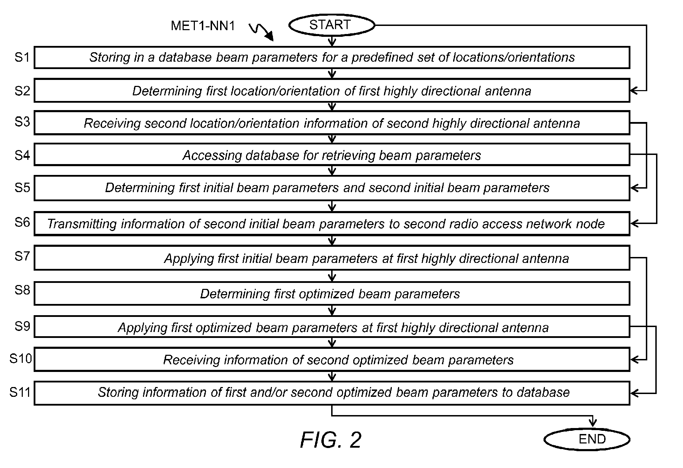

Figure 2 shows schematically a flow diagram of a method of a first radio access network node for configuring radio frequency transmission between a first highly directional antenna and a second highly directional antenna of a second radio access network node in the first frequency range and for signalling information between the first radio access network node and the second radio access network in the second frequency range according to a first exemplary embodiment.

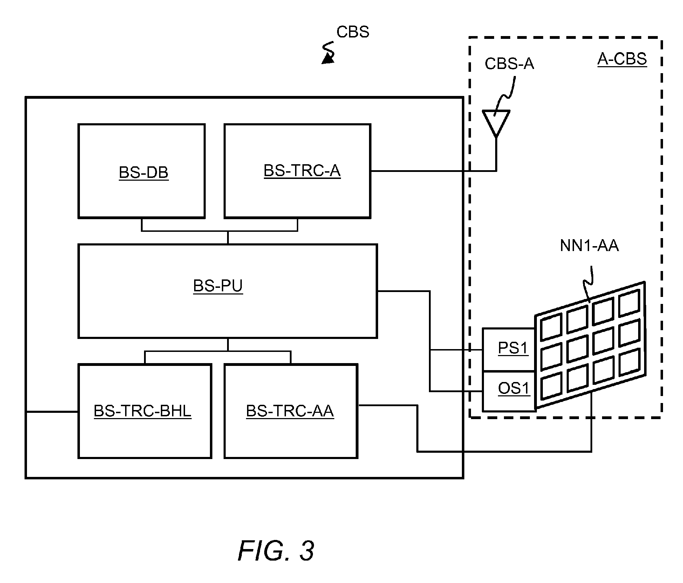

Figure 3 shows schematically a block diagram of a first radio access network node for configuring radio frequency transmission between a first highly directional antenna and a second highly directional antenna of a second radio access network node in the first frequency range and for signalling information between the first radio access network node and the second radio access network in the second frequency range according to a first exemplary embodiment.

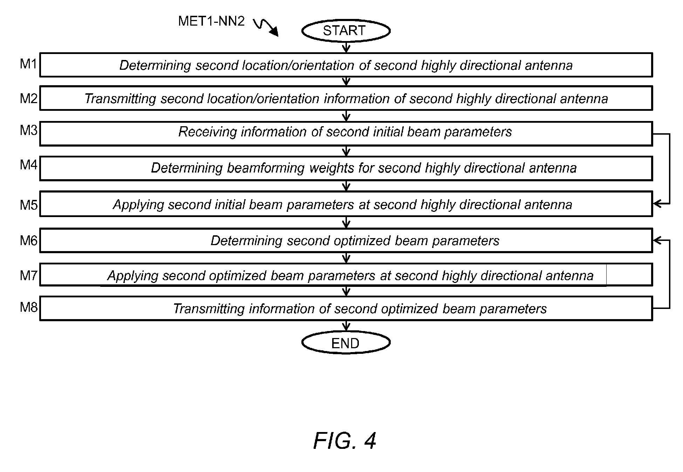

Figure 4 shows schematically a flow diagram of a method of a second radio access network node for configuring radio frequency transmission between a first highly directional antenna and a second highly directional antenna of the second radio access network node in the first frequency range and for signalling information between the first radio access network node and the second radio access network in the second frequency range according to a first exemplary embodiment.

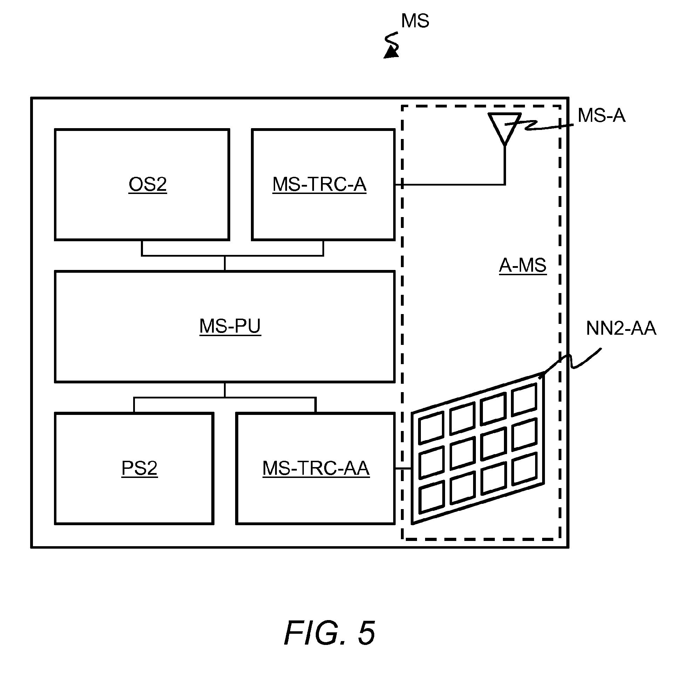

Figure 5 shows schematically a block diagram of a second radio access network node for configuring radio frequency transmission between a first highly directional antenna and a second highly directional antenna of the second radio access network node in the first frequency range and for signalling information between the first radio access network node and the second radio access network in the second frequency range according to a first exemplary embodiment.

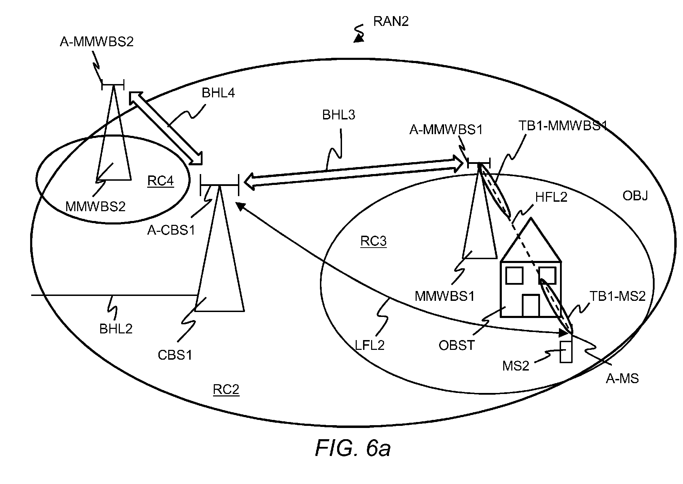

Figure 6a shows schematically a block diagram of a cellular radio access network which contains a cellular base station for radio frequency transmission in the second frequency range, a first base station for radio frequency transmission in the first frequency range and controlled by the cellular base station via a first backhaul link, a second base station for radio frequency transmission in the first frequency range and controlled by the cellular base station via a second backhaul link, and a mobile station exchanging user data with the first base station via the radio frequency transmission in the first frequency range and exchanging signaling data with the cellular base station in the second frequency range at a first point in time during a beam adjustment according to a second exemplary embodiment.

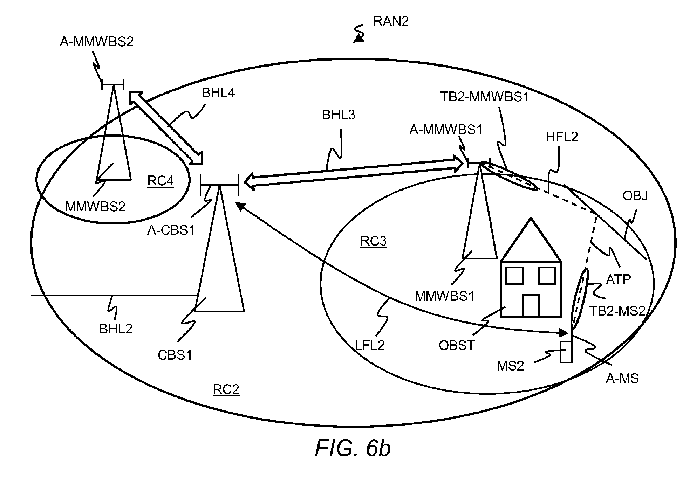

Figure 6b shows schematically a block diagram of the cellular radio access network shown in Figure 6a but at a second point in time after a beam optimization procedure according to the second exemplary embodiment.

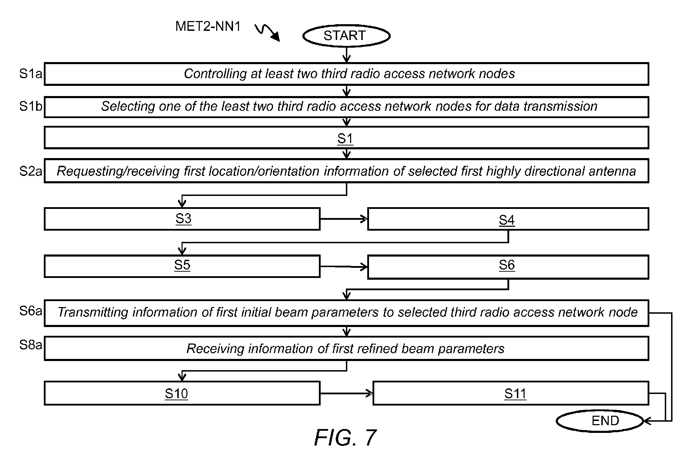

Figure 7 shows schematically a flow diagram of a method of a first radio access network node for configuring radio frequency transmission between a first highly directional antenna and a second highly directional antenna of a second radio access network node in the first frequency range and for signalling information between the first radio access network node and the second radio access network in the second frequency range according to a second exemplary embodiment.

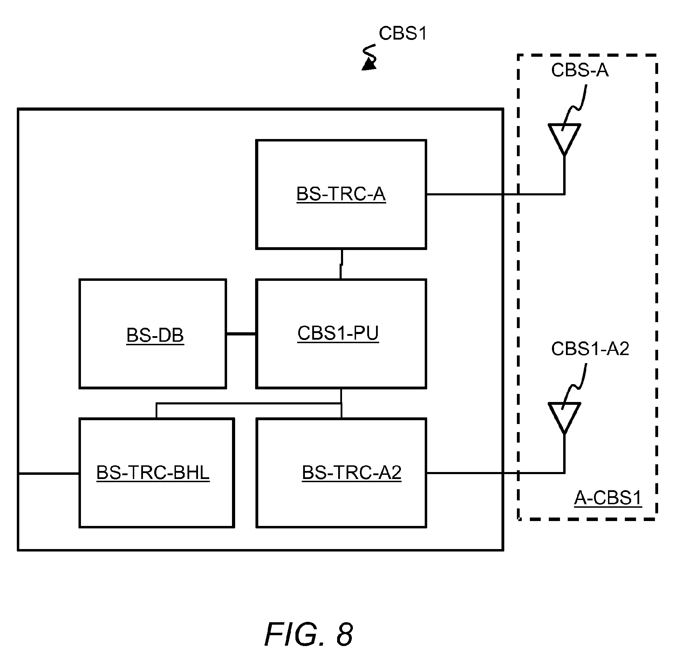

Figure 8 shows schematically a block diagram of a first radio access network node for configuring radio frequency transmission between a first highly directional antenna and a second highly directional antenna of a second radio access network node in the first frequency range and for signalling information between the first radio access network node and the second radio access network in the second frequency range according to a second exemplary embodiment.

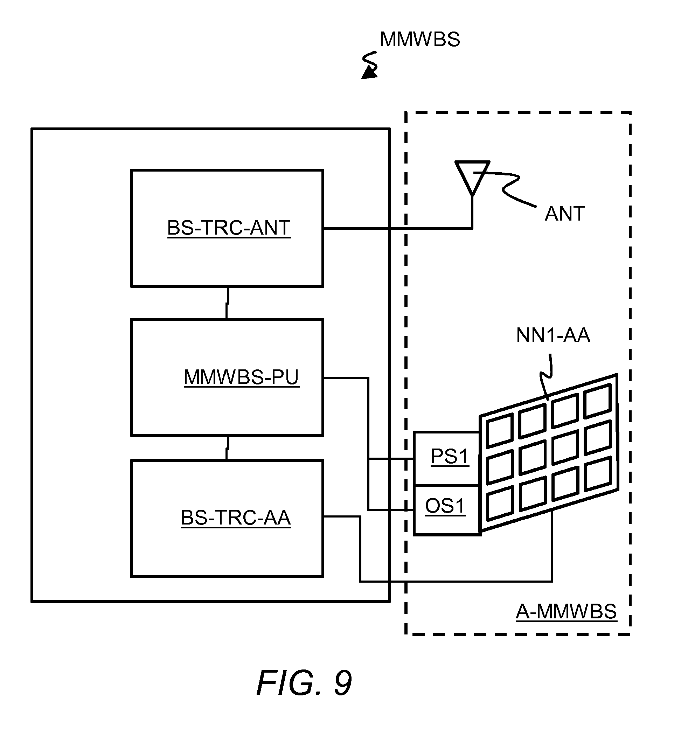

Figure 9 shows schematically a block diagram of a second radio access network node adapted for radio frequency transmission in the first frequency range and for measuring a location and an orientation of the first highly directional antenna according to an exemplary embodiment.

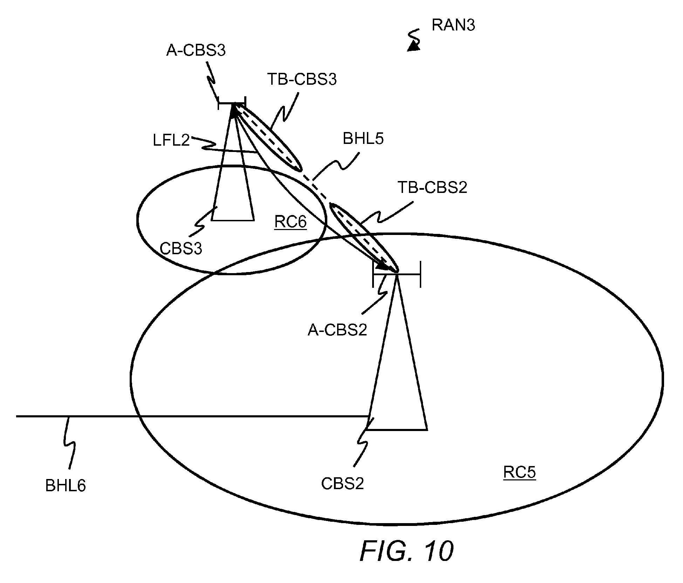

Figure 10 shows schematically a block diagram of a cellular radio access network which contains a first cellular base station for radio frequency transmission in the second frequency range and a second cellular base station for radio frequency transmission in the second frequency range with a first backhaul link between the first cellular base station and the second cellular base station using the radio frequency transmission in the first frequency range for exchanging user data and with a second backhaul link between the first cellular base station and the second cellular base station using radio frequency transmission in the second frequency range for exchanging signaling data for setting up the first backhaul link according to a third exemplary embodiment.

## DESCRIPTION OF THE EMBODIMENTS

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

A splitting of processing functions across processing units shown in the Figure(s) is not critical, and as can be understood by those skilled in the art that the number of processing units, the number of processing functions and an allocation of the processing functions to the processing units may vary without departing from the scope of the embodiments of the invention as defined in the appended claims. Likewise, the number of the steps for performing the method(s) shown in the Figures is not critical, and as can be understood by those skilled in the art that the number of the steps and the sequence of the steps may vary without departing from the scope of the embodiments of the invention as defined in the appended claims.

Figure 1 shows schematically a block diagram of a radio access network RAN1 which contains a base station CBS and a mobile station MS1. The radio access network RAN1 provides wireless access in a radio cell RC1 and may be for example a radio access network of a cellular mobile communication system with a radio access technology such as based on GSM/GPRS (GSM = Global System for Mobile Communication, GPRS = General Packet Radio Service), UMTS (UMTS = Universal Mobile Telecommunication Systems), HSPA (HSPA = High Speed Packet Access), LTE (LTE = Long Term Evolution) or LTE-Advanced, which are all standardized by 3GPP (3GPP = 3rd Generation Partnership Project). Alternatively, the radio access network RAN1 may be a WLAN (WLAN = Wireless Local Area Network) which may be based on one of the IEEE 802.11 standards. In a further alternative, the radio access network RAN1 may be for example a WiMAX network (WiMAX = Worldwide Interoperability for Microwave Access) based on one of the IEEE 802.16 standards for enabling a delivery of last mile wireless broadband access as an alternative to cable and DSL (DSL = Digital Subscriber Line). In even further alternatives, the radio access network RAN1 may be based on one of the CDMA family of standards including cdmaOne, CDMA2000, and CDMA2000 EV-DO which are standardized by 3GPP2 (3GPP2 = 3rd Generation Partnership Project 2).

The term "base station" may be considered synonymous to and/or referred to as a base transceiver station, cellular base station, access point base station, access point, macro base station, macrocell, micro base station, microcell, femtocell, picocell etc. and may describe equipment that provides wireless connectivity via one or more radio links to one or more mobile stations.

The term "macro base station" may be considered synonymous to and/or referred to a base station, which provides a radio cell having a size in a range of several hundred meters up to several kilometres. A macro base station usually has a maximum output power of typically tens of watts.

The term "micro base station" may be considered synonymous to and/or referred to a base station, which provides a radio cell having a size in a range of several tens of meters up to hundred meters. A micro base station usually has a maximum output power of typically several watts.

The term "macro cell" may be considered synonymous to and/or referred to a radio cell, which provides the widest range of all radio cell sizes. Macro cells are usually found in rural areas or along highways.

The term "micro cell" may be considered synonymous to and/or referred to a radio cell in a cellular network served by a low power cellular base station, covering a limited area (smaller than an area of a macro cell) such as a mall, a hotel, or a transportation hub. A microcell is referred to a group of radio cells, which contain pico cells and femto cells.

The term "pico cell" may be considered synonymous to and/or referred to a small cellular base station typically covering a small area, such as in-building (offices, shopping malls, train stations, stock exchanges, etc.), or more recently in-aircraft. In cellular networks, pico cells are typically used to extend coverage to indoor areas where outdoor signals do not reach well, or to add network capacity in areas with very dense phone usage, such as train stations.

The term "femto cell" may be considered synonymous to and/or referred to a small, low-power cellular base station, typically designed for use in a home or small business. A broader term which is more widespread in the industry is small cell, with femto cell as a subset.

The term "mobile station" may be considered synonymous to, and may hereafter be occasionally referred to, as a mobile unit, mobile user, access terminal, user equipment, subscriber, user, remote station or a small cell, pico cell or femto cell when located in a moving vehicle such as a bus, a train or even a car. The mobile station may be for example a cellular telephone, a smart phone, a portable computer, a pocket computer, a hand-held computer, a personal digital assistant, a moving base station, a smart watch, a head mounted display such as a Google glass or a vehicle-mounted mobile device such as a repeater or relay.

The base station CBS contains an antenna system A-CBS at a location of the base station CBS. Alternatively, the antenna system A-CBS may be a remote antenna system at a different location than the location of the base station CBS and therefore may be not part of the base station CBS but connected to the base station CBS for example via a so-called CPRI interface (CPRI = Common Public Radio Interface). The remote antenna system may be for example an AAA (AAA = Active Antenna Array) or a RRH (RRH = Remote Radio Head). The antenna system A-CBS contains a first highly directional antenna for a first wireless link HFL1 between the antenna system A-CBS and the mobile station MS1 for a wireless communication of first radio frequency signals in a first frequency range (see also Figure 3).

The base station CBS determines based on a first location of the first highly directional antenna and further based on a second location of the second highly directional antenna first initial beam parameters for the first highly directional antenna such as a beam direction for applying an antenna pattern and for adjusting a direction of a radiation beam TB-CBS at the first highly directional antenna for the first wireless link HFL1. Alternatively, the base station CBS determines further based on a first orientation of the first highly directional antenna beamforming weights for the first highly directional antenna for applying the antenna pattern and for adjusting the direction of the radiation beam TB-CBS at the first highly directional antenna.

The base station CBS further determines second initial beam parameters such as a beam direction for the second highly directional antenna of the mobile station MS1 based on the location of the first highly directional antenna and based on the location of the second highly directional antenna for applying an antenna pattern and adjusting a direction of a radiation beam TB-MS1 at the second highly directional antenna for the first wireless link HFL1. Alternatively, the base station CBS determines beamforming weights for the second highly directional antenna further based on the first orientation of the first highly directive antenna and further based on the second orientation of the second highly directional antenna for applying the antenna pattern and for adjusting the direction of the radiation beam TB-MS1 at the second highly directional antenna.

The adjustment of the direction of the radiation beam TB-CBS may be for example according to an azimuth angle AZ-A-CBS and on an elevation angle EL-A-CBS. An origin of a two dimensional Cartesian coordinate system may be for example at the location of the antenna system A-CBS and a plane of the two-dimensional Cartesian coordinate system may be oriented in parallel to the Earth's surface. A first axis of the two-dimensional Cartesian coordinate system may be oriented towards the North pole (N), also known as the Geographic North Pole or Terrestrial North Pole, and towards the South pole (S), also known as the Geographic South Pole or Terrestrial South Pole. A second axis of the two-dimensional Cartesian coordinate system may be oriented towards the West cardinal direction (W) and the East cardinal direction (E). A line-of-sight direction from the antenna system A-CBS to the antenna system A-MS of the mobile station MS1 is given by a line-of-sight vector LOS-V. A projection of the line-of-sight vector LOS-V into the two-dimensional plane of the Cartesian coordinate system provides a further vector V2. The azimuth angle AZ-A-CBS may be given for example as an angle between the North direction and the further vector V2. The elevation angle EL-A-CBS may be given for example as an angle between the further vector V2 and the line-of-sight vector LOS-V.

In a similar way an azimuth angle and an elevation angle for the antenna system A-MS may be defined, which is not shown in Figure 1 for simplification but can be easily derived by a person skilled in the art.

The first frequency range preferably contains frequencies equal to or above 10 GHz. The first frequency range may be for example a part of a so-called extremely high frequency range which is usually defined between 30 GHz and 300 GHz. In a preferred embodiment the first frequency range may be adapted for generating radio frequency signals with millimetre wave frequencies between 20 GHz and 300 GHz.

The antenna system A-CBS is further adapted for providing a second wireless link LFL1 between the antenna system A-CBS and the mobile station MS1 for a further wireless communication of second radio frequency signals in a second frequency range which contains preferably frequencies below 10 GHz. The second frequency range may be for example a frequency range as applied by a conventional cellular mobile communication system such as an UMTS or an LTE network or by a WLAN or a WiMAX network. The second frequency range may have for example radio frequencies around 5 GHz, around 3.5 GHz, around 2.4 GHz or around 700 MHz.

The second wireless link LFL1 using the second frequency range is applied for signalling location information of the mobile station MS1 or for signalling second location information and second orientation information of the mobile station MS1 to the base station CBS, which uses the second location information or the second location information and the second orientation information for determining second initial beam parameters to be applied at the second highly directional antenna of the antenna system A-MS of the mobile station MS1 for adjusting a beam direction TB-MS1 for a wireless communication between the base station CBS and the mobile station MS1 via the first wireless link HFL1 in the first frequency range. The second wireless link LFL1 is further applied for signalling the second initial beam parameters for the second highly directional antenna from the base station CBS to the mobile station MS1.

The base station CBS further contains an interface BHIF for a backhaul link BHL1 to either a further base station of the radio access network RAN1 or to a core network node of a cellular mobile communication system. More details of the base station CBS are described with respect to Figure 3.

The mobile station MS1 contains the antenna system A-MS. The antenna system A-MS contains the second highly directional antenna for the first wireless link HFL1 between the antenna system A-CBS and the mobile station MS1 for the wireless communication of the first radio frequency signals in the first frequency range (see also Figure 5). The antenna system A-MS is further adapted for providing the second wireless link LFL1 between the antenna system A-CBS and the mobile station MS1 for the further wireless communication of the second radio frequency signals in the second frequency range. More details of the mobile station MS1 are described with respect to Figure 5.

In a preferred embodiment, the first highly directional antenna may be adapted to form multiple beams in the first frequency range to multiple mobile stations.

Figure 2 shows a flow diagram of a method MET1-NN1 of the base station CBS for configuring radio frequency transmission between the first highly directional antenna connected to the base station CBS and the second highly directional antenna of the mobile station MS1.

In a first optional step S1 for example when the base station CBS is going to be installed as part of the cellular radio access network RAN1, pre-determined beam parameters may stored in a database in correlation to a predefined set of locations of the first highly directional antenna of the base station CBS and of the second highly directional antenna of the mobile station MS1 or in correlation to a predefined set of the locations of the first highly directional antenna and of the second highly directional antenna and further in correlation to a predefined set of orientations of the first highly directional antenna and of the second highly directional antenna as shown for example in following table 1, which is related to a 2D scenario (2D = two dimensional):

Table 1: Beam directions for positions of the highly directional antennas in a two dimensional area

| Location of first highly directional antenna of the base station CBS | Location of mobile station MS1 (= location of second highly directional antenna) | Beam direction for the first highly directional antenna | Beam direction for the second highly directional antenna |
|---|---|---|---|
| $x_{cbs,2D,1}$, $y_{cbs,2D,1}$ | $x_{ms,2D,1}$, $y_{ms,2D,1}$ | $Az_{cbs,2D,1}$ | $Az_{ms,2D,1}$ |
| $x_{cbs,2D,1}$, $y_{cbs,2D,1}$ | $x_{ms,2D,2}$, $y_{ms,2D,2}$ | $Az_{cbs,2D,2}$ | $Az_{ms,2D,2}$ |
| ... | ... | ... | ... |

In the 2D scenario, the beam parameters are designed only depending on the locations of the first and the second highly directional antenna and an external environment is not taken into account. The 2D scenario may be used when the first and the second highly directional antennas have a same z-coordinate (i.e. a same height). In such a case the elevation angle is simply zero for both, the first and the second highly directional antenna. For simplification only two lines with parameters are given in the table 1, which has to be read in the following way: The location of the first highly directional antenna of the base station CBS may be fixed (given by position data $x_{cbs,2D,1}$, $y_{cbs,2D,1}$) for all locations of the second highly directional antenna of the mobile station MS1. The location of the second highly directional antenna is given for a first location (given by first position data $x_{ms,2D,1}$, $y_{ms,2D,1}$) and a second location (given by second position data $x_{ms,2D,2}$, $y_{ms,2D,2}$). Due to the different locations of the second highly directional antenna, beam direction parameters of the first highly directional antenna (azimuth angle $Az_{cbs,2D,1}$ for the first location and azimuth angle $Az_{cbs,2D,2}$ for the second location) and of the second highly directional antenna (azimuth angle $Az_{ms,2D,1}$ for the first location and azimuth angle $Az_{ms,2D,2}$ for the second location) are also different.

The first highly directional antenna of the base station CBS may be tiltable but not movable. Therefore, the position data of the first highly directional antenna are the same for the various position data of the mobile station MS1 which contains the second highly directional antenna.

Further parameters for further positions may be contained in table 1 for example in such a way, that for a grid with intervals of 10 m in x direction and 10 m in y direction for all possible positions of the mobile station MS1 within the radio cell RC1 beam direction values are pre-stored in the table 1.

The x-values and y-values listed in the first and second column of the above table 1 are preferably positions in a two-dimensional Cartesian coordinate system, which is parallel to a section of the Earth's surface (see Figure 1). The above listed table 1 may be preferably applied, when the positions of the first highly directional antenna and of the second highly directional antenna are dominated by differences in the x-values and y-values and when differences in z-values (height values) of the first highly directional antenna and the second highly directional antenna are negligible for a calculation of the beam directions of the first highly directional antenna and the second highly directional antenna.

The azimuth angles $Az_{cbs,2D,1}$, $Az_{cbs,2D,2}$ for the beam direction of the beam TB-CBS at the first highly directional antenna may be determined for example according to following equation:

$$Az_{cbs,2D,i} = \tan^{-1} \frac{y_{ms,2D,i} - y_{cbs,2D,1}}{x_{ms,2D,i} - x_{cbs,2D,1}} \qquad (1)$$

The azimuth angles $Az_{ms,1}$, $Az_{ms,2}$ for the beam direction of the beam TB-MS at the second highly directional antenna may be determined easily in a same way by a skilled person in the art based on a further equation similar to the equation (1).

In an alternative embodiment, position data of the first highly directional antenna of the base station CBS and of the second highly directional antenna of the mobile station MS1 may be stored in the database with respect to a three dimensional Cartesian coordinate system such as listed exemplarily in following table 2, which is related to a 3D scenario (3D = three dimensional):

Table 2: Beam directions for positions of the highly directional antennas in a three dimensional area

| Location of first highly directional antenna of the base station CBS | Location of mobile station MS1 (= location of second highly directional antenna) | Beam direction for the first highly directional antenna | Beam direction for the second highly directional antenna |
|---|---|---|---|
| $x_{cbs,3D,1}$, $y_{cbs,3D,1}$, $z_{cbs,3D,1}$ | $x_{ms,3D,1}$, $y_{ms,3D,1}$, $z_{ms,3D,1}$ | $Az_{cbs,3D,1}$, $El_{cbs,3D,1}$ | $Az_{ms,3D,1}$, $El_{ms,3D,1}$ |
| $x_{cbs,3D,1}$, $y_{Cbs,3D,1}$, $z_{cbs,3D,1}$ | $x_{ms,3D,2}$, $y_{ms,3D,2}$, $z_{ms,3D,2}$ | $Az_{cbs,3D,2}$, $El_{cbs,3D,2}$ | $Az_{ms,3D,2}$, $El_{ms,3D,2}$ |
| ... | ... | ... | ... |

In the 3D scenario, z-coordinates for the first highly directional antenna and the second highly directional antenna are different. In such a case, the azimuth angles $Az_{cbs,3D,1}$, $Az_{cbs,3D,2}$ for the beam direction of the beam TB-CBS at the first highly directional antenna and for the azimuth angles $Az_{ms,3D,1}$, $Az_{ms,3D,2}$ for the beam direction of the beam TB-MS at the second highly directional antenna may be determined for example by an equation, which corresponds to the equation (1).

With respect to table 2, the elevation angles $El_{cbs,3D,1}$, $El_{cbs,3D,2}$ for the beam direction of the beam TB-CBS at the first highly directional antenna may be determined for example according to following equation:

$$El_{cbs,3D,i} = \tan^{-1} \frac{z_{ms,3D,i} - z_{cbs,3D,1}}{\sqrt{(x_{ms,3D,i} - x_{cbs,3D,1})^2 + (y_{ms,3D,i} - y_{cbs,3D,1})^2}} \qquad (2)$$

The elevation angles $El_{ms,3D,1}$, $El_{ms,3D,2}$ for the beam direction of the beam TB-MS at the second highly directional antenna may be determined easily in a similar way by a skilled person in the art based on a further equation similar to the equation (2).

In a further alternative embodiment, position data, orientation data and preferably antenna type information about an antenna type of the first highly directional antenna of the base station CBS and of the second highly directional antenna of the mobile station MS1 may be stored in the database with respect to a three dimensional Cartesian coordinate system such as listed exemplarily in following table 3:

Table 3: Beam directions for positions of the highly directional antennas in a three dimensional area

| Location of first highly directional antenna of the base station CBS | Type of first highly direct. anten. | Orientation of first highly directional antenna of the base station CBS | Location of mobile station MS1 (= location of second highly directional antenna) | Type of second highly direct. anten. | Orientation of mobile station MS1 (= orientation of second highly directional antenna) | Beamforming weights for the first highly directional antenna | Beamforming weights for the second highly directional antenna |
|---|---|---|---|---|---|---|---|
| $x_{cbs,3D,1}, y_{cbs,3D,1}, z_{cbs,3D,1}$ | $t_{cbs,1}$ | $Az_{an_{cbs},3D,1}, El_{an_{cbs}3D,1}$ | $x_{ms,3D,1}, y_{ms,3D,1}, z_{ms,3D,1}$ | $t_{ms,1}$ | $Az_{an_{ms},3D,1}, El_{an_{ms},3D,1}$ | $\begin{Bmatrix} bw_{cbs,11}, \\ bw_{cbs,12}, \\ ..., \\ bw_{cbs,1N} \end{Bmatrix}$ | $\begin{Bmatrix} bw_{ms,11}, \\ bw_{ms,12}, \\ ..., \\ bw_{ms,1M} \end{Bmatrix}$ |
| $x_{cbs,3D,1}, y_{cbs,3D,1}, z_{cbs,3D,1}$ | $t_{cbs,1}$ | $Az_{an_{cbs},3D,1}, El_{an_{cbs}},3D,1$ | $x_{ms,3D,1}, y_{ms,3D,1}, z_{ms,3D,1}$ | $t_{ms,2}$ | $Az_{an_{ms},3D,1}, El_{an_{ms},3D,1}$ | $\begin{Bmatrix} bw_{cbs,11}, \\ bw_{cbs,12}, \\ ..., \\ bw_{cbs,1N} \end{Bmatrix}$ | $\begin{Bmatrix} bw_{ms,21}, \\ bw_{ms,22}, \\ ..., \\ bw_{ms,2K} \end{Bmatrix}$ |
| $x_{cbs,3D,1}, y_{cbs,3D,1}, z_{cbs,3D,1}$ | $t_{cbs,1}$ | $Az_{an_{cbs},3D,2}, El_{ac_{bs},3D,2}$ | $x_{ms,3D,2}, y_{ms,3D,2}, z_{ms,3D,2}$ | $t_{ms,1}$ | $Az_{an_{ms},3}D,2, El_{an_{ms},3D,2}$ | $\begin{Bmatrix} bw_{cbs,21}, \\ bw_{cbs,22}, \\ ..., \\ bw_{cbs,2N} \end{Bmatrix}$ | $\begin{Bmatrix} bw_{ms,31}, \\ bw_{ms,32}, \\ ..., \\ bw_{ms,3M} \end{Bmatrix}$ |
| ... | | ... | ... | | ... | ... | ... |

The antenna type such as a uniform linear array, a rectangular planar array, a circular planar array or a cylindrical array has an influence on the beamforming weights to be used. This means that for different antenna types different beamforming weights may be stored in the database. The first row of table 3 contains beam direction parameters and beamforming parameters for a fixed location ($x_{cbs,3D,1}$, $y_{cbs,3D,1}$, $z_{cbs,3D,1}$) of the first highly directional antenna, for a fixed type ($t_{cbs,1}$) of the first highly directional antenna, for a first location ($x_{ms,3D,1}$, $y_{ms,3D,1}$, $z_{ms,3D,1}$) of the second highly directional antenna and for a first type ($t_{ms,1}$) of the second highly directional antenna (e.g. for a first mobile station of a first type). The fixed type of the first highly directional antenna may be for example a rectangular planar antenna array. The first type of the second highly directional antenna may be for example a uniform linear antenna array of a smartphone. The second row of table 3 contains in comparison to the first row beam direction parameters and beamforming parameters for a second type ($t_{ms,2}$) of the second highly directional antenna such as a further rectangular planar antenna array (e.g. for a second mobile station of a second type different to the first type of the first mobile station) at same locations of the first and the second highly directional antenna. The third row of table 3 contains in comparison to the first row beam direction parameters and beamforming parameters for the first type ($t_{ms,1}$) of the second highly directional antenna, for the fixed location of the first highly directional antenna and for a second location ($x_{ms,3D,2}$, $y_{ms,3D,2}$, $z_{ms,3D,2}$) of the second highly directional antenna.

The azimuth angles and the elevation angles may be given with respect to an orientation of an electrical boresight of the highly directional antennas. The electrical boresight may be for example equal to a perpendicular with respect to electrical excitation areas of an antenna array.

With respect to table 3, the beamforming weigths for forming the beam TB-CBS at the first highly directional antenna with a direction relative to the boresight of the first highly directional antenna may be determined for a specific antenna type of the first highly directional antenna based on the beam direction and based on the orientation of the first highly directional antenna. A computation of the beamforming weights depend not only on the antenna type, but also on a criterion that shall be optimized. An example is given in the following:

A 2D scenario with an application of a uniform linear antenna array at the base station CBS is assumed. An antenna pattern and corresponding radiation beam for the first highly directional antenna may be designed by simply assuming that the maximum gain is in the direction of the mobile station MS. In such a case an expression for the beamforming weights may be given for example by following equation:

$$bw_{cbs,1n} = e^{\left\{ \frac{-j \cdot 2 \cdot \pi \cdot (n-1) \cdot \sin\left(Az_{cbs,2D,1} - Az an_{cbs,2D,1}\right) \cdot d}{\lambda} \right\}} \qquad (3)$$

with:

n = 1,2,...,N;
$\lambda$: wavelength corresponding to the frequency of the first frequency range;
d: inter-element distance between antenna elements of the first highly directional antenna.

For a more general formulation and for more details please refer to chapter 6 of the book H. L. Van Trees, "Optimum Array Processing: Part IV of Detection, Estimation and Modulation Theory", John Wiley & Sons, 2002.

The beamforming weigths for forming the beam TB-MS1 at the second highly directional antenna with a direction relative to the boresight of the second highly directional antenna may be determined easily in a same way by a skilled person in the art based on a further equation similar to the equation (3).

The database may be a local database and part of the base station CBS (see also Figure 3). In an alternative embodiment, the database may be a central database for a group of several base stations or for all base stations of a cellular mobile communication system.

In a further step S2 after the step S1 or as a first step, the base station CBS determines the location of the first highly directional antenna or determines the location and the orientation of the first highly directional antenna.

The location of the first highly directional antenna may be for example pre-configured and stored in the local database of the base station CBS at a point of time, when the base station CBS is installed as part of the radio access network RAN1. In such a case, the base station CBS can easily retrieve the location of the first highly directional antenna by simply accessing the local database. Alternatively, the location may be measured by a position sensor near the first highly directional antenna. The location of the first highly directional antenna may be for example provided in a same format as the x values and the y values or as the x values, the y values and the z values, which are given above with respect to the tables 1, 2 and 3.

The orientation of the first highly directional antenna may be represented for example by the electrical boresight and may be either pre-configured and stored in the local database of the base station CBS when the orientation of the first highly directional antenna is fixed or the location may be preferably measured by an orientation sensor near the first highly directional antenna, when the first highly directional antenna is tiltable in a mechanical way (more details about the position sensor and the orientation sensor are given with respect to the Figure 3). The orientation of the first highly directional antenna may be for example provided in a same format as the azimuth angles and the elevation angles, which are given above with respect to the tables 1, 2 and 3.

In a next step S3, the base station CBS receives from the mobile station MS1 via the second wireless link LFL1 second location information about the location of the mobile station MS1 (identical to the location of the second highly directional antenna) or receives from the mobile station MS1 via the second wireless link LFL1 the second location information and second orientation information (identical to the orientation of the second highly directional antenna) about the orientation of the mobile station MS1. If different antenna types are used at the mobile stations, the base station CBS preferably receives in addition to the second orientation information also second antenna type information about an antenna type of the second highly directional antenna of the mobile station MS1.

Usually, the base station CBS may request from the mobile station MS1 the second location information or the second location information and the second orientation information and preferably the second antenna type information about the antenna type at a beginning of a wireless communication with the mobile station MS1 via the first wireless link HFL1. Alternatively, the mobile station MS1 may transmit the second location information or the second location information and the second orientation information and preferably the second antenna type information about the antenna to the base station CBS, when either the mobile station MS1 has been moved a predefined distance such as 10 m in comparison to a previous location for which the second location information has been transmitted or when the mobile station MS1 has been tilted a predefined angle such as 5° in comparison to a previous angle for which the second orientation information has been transmitted.

In a further optional step S4, the base station CBS accesses the database for retrieving the first initial beam parameters and the second initial beam parameters in correlation to current positions of the first highly directional antenna and the second highly directional antenna or in correlation to current positions of the first highly directional antenna and the second highly directional antenna and further in correlation to current orientations of the first highly directional antenna and the second highly directional antenna and preferably further in correlation to antenna types of the first highly directional antenna and the second highly directional antenna such as described with respect to tables 1, 2 or 3.

In a next step S5 after the step S3, the base station CBS determines the first initial beam parameters for the first highly directional antenna and the second initial beam parameters for the second highly directional antenna for example with an assumption that an LOS path is available between the first highly directional antenna and the second highly directional antenna. The base station CBS may for example determine beam directions to be applied at the first highly directional antenna and at the second highly directional antenna according to equations (1) and (2). Alternatively, the base station CBS may determine during the step S5 which may be executed after the step S4 beamforming weights to be applied at the first highly directional antenna and at the second highly directional antenna according to the equation (3) based on the pre-stored beam directions which may be retrieved for example from table 1 or table 2 and further based on current orientations of the first highly directional antenna and the second highly directional antenna.

Under the assumption that a set of pre-stored beamforming weights computed by equation (3) for a pre-defined set of locations and orientations is stored in the database BS-DB, a set of initial beam parameters may be selected by using following (4), which holds for the basic example with uniform linear array of equation (3):

$$bw_{cbs,2D} = \mathrm{argmax}\{b \in B\} \left| \sum_{n=1}^{N} b\{n\}\, e^{\left\{ \frac{j \cdot 2 \cdot \pi \cdot (n-1) \cdot \sin\left(Az_{cbs,2D,1} - Az_{an_{cbs},2D,1}\right) \cdot d}{\lambda} \right\}} \right|^2$$

$$(4)$$

with:

B: is a set collecting the pre-stored beam parameters;

$b = [b\{1\}, b\{2\}, ..., b\{N\}]$: indicates a general element of B.

By a next step S6 after the step S4 or after the step S5, the base station CBS transmits to the mobile station MS1 via the second wireless link LFL2 the second initial beam parameters to be applied at the second highly directional antenna of the mobile station MS1. The second initial beam parameters may be for example either an azimuth angle or an azimuth angle and an elevation angle or beamforming weights to be applied by a transmitter of the mobile station MS1 for a transmission of uplink radio frequency signals from the second highly directional antenna.

In a further step S7, the base station CBS applies the first initial beam parameters for obtaining an initial antenna pattern and a corresponding beam direction of the radiation beam TB-CBS of the first highly directional antenna. Thereby, a radio frequency signal to be transmitted is multiplied with a (usually) complex factor, a beamforming weight, which is dedicated for one of the antenna elements of the first highly directional antenna. This multiplication is repeated for each antenna element of the first highly directional antenna and can be done either by an analogue attenuator and phase shifter, or digitally on a digital baseband board before up-conversion. A determination of this complex beamforming weight is according to equation (3) provided above.

By a further optional step S8, the base station CBS determines first optimized beam parameters for the radiation beam TB-CBS of the first highly directional antenna. The determination of the first optimized beam parameters may be obtained for example in a following way: Differently pre-coded pilot signals, which represent different beam directions in the vicinity of the initial beam direction may be transmitted in downlink direction during a training phase from the base station CBS to the mobile station MS1. The mobile station MS1 may measure receive powers of the differently pre-coded pilot signals and may report corresponding receive power values to the base station CBS via the first wireless link HFL1 or the second wireless link LFL1. The base station CBS may select and determine new beamforming weights as first optimized beam parameters for the radiation beam of the first highly directional antenna for that pre-coding for which a maximum receive power has been reported. This method may be similar to a method as defined as a special operation mode in 3GPP Release 10.

In a next optional step S9, the base station CBS preferably applies the first optimized beam parameters for obtaining an optimized beam direction of the radiation beam TB-CBS of the first highly directional antenna preferably by applying directly the beamforming weights as selected in the previous step S8.

In a further optional step S10 after the step S7, the base station CBS receives from the mobile station MS1 via the second wireless link LFL1 or via the first wireless link HFL1 second optimized beam parameters as applied at the second highly directional antenna for obtaining an optimized beam direction of the radiation beam TB-MS. The second optimized beam parameters preferably contain beamforming weights as applied for the optimized beam direction of the radiation beam TB-MS.

In a next optional step S11 after the step S10 or after the step S9 for updating the database, the base station CBS stores to the database the first optimized beam parameters, when determined by the step S8 or stores to the database the second optimized beam parameters, when received by the step S10 in correlation to current locations of the first highly directional antenna of the base station CBS and of the second highly directional antenna of the mobile station MS1 or in correlation to current locations of the first highly directional antenna and of the second highly directional antenna and further in correlation to current orientations of the first highly directional antenna and of the second highly directional antenna.

Figure 3 shows schematically an exemplarily block diagram of the base station CBS. The base station CBS contains a local database BS-DB. In an alternative embodiment, the database BS-DB may be not a local database and may be not part of the base station CBS but may be instead a central database of a central network node of the radio access network RAN1 or of a core network of a cellular mobile communication system.

The base station CBS further contains a first transceiver BS-TRC-AA for transmitting downlink radio frequency signals in the first frequency range via the first highly directional antenna NN1-AA and for receiving uplink radio frequency signals in the first frequency range via the first highly directional antenna NN1-AA, a second transceiver BS-TRC-A for transmitting downlink radio frequency signals in the second frequency range via a further antenna CBS-A and for receiving uplink radio frequency signals in the second frequency range via the further antenna CBS-A and a third transceiver BS-TRC-BHL for transmitting and receiving user data or signaling information via the backhaul link BHL1 from a neighboring base station or from a core network of a cellular mobile communication system. The base station further contains a processing module or processing unit BS-PU which is internally connected to the database BS-DB, the first transceiver BS-TRC-AA, the second transceiver BS-TRC-A and the third transceiver BS-TRC-BHL and which operates and controls the database BS-DB, the first transceiver BS-TRC-AA, the second transceiver BS-TRC-A and the third transceiver BS-TRC-BHL. The processing unit BS-PU is further adapted for determining the first initial beam parameters, the second initial beam parameters and the first optimized beam parameters.

The base station CBS may further contain the antenna system A-CBS when co-located to the base station CBS or the antenna system A-CBS may be regarded as a separate unit when remotely connected to the base station CBS.

The antenna system A-CBS contains the first highly directional antenna NN1-AA, the further antenna CBS-A, a position sensor PS1 near or attached to the first highly directional antenna NN1-AA and connected to the processing unit BS-PU of the base station CBS and an orientation sensor OS1 attached to the first highly directional antenna NN1-AA which is also connected to the processing unit BS-PU of the base station CBS.

The first highly directional antenna NN1-AA may be for example a rectangular planar antenna array which contains 36 antenna elements in a 6 x 6 arrangement. An antenna array with such a large number of antenna elements may be also called a massive MIMO antenna array, although MIMO antenna arrays in general do not fulfil the constraints needed for forming narrow antenna pattern without grating lobes, as needed for the purpose of the described embodiments.

Alternatively, the rectangular planar antenna array may contain for example 25 antenna elements in a 5 x 5 arrangement, 40 antenna elements in a 8 x 5 arrangement (8 columns and 5 rows), 50 antenna elements in a 5 x 10 arrangement (5 columns and 10 rows) or 64 antenna elements in a 8 x 8 arrangement. Certainly, rectangular planar antenna arrays with further number of antenna elements in further arrangements of columns and rows may be used for the first highly directional antenna NN1-AA. The further antenna CBS-A may be an antenna with a single antenna element or also a MIMO antenna array with for example 4 antenna elements in a 2 x 2 arrangement.

The position sensor PS1 may be for example a receiver of a global or regional navigation satellite system such as GPS, GLONASS (GLONASS = Globalnaya navigatsionnaya sputnikovaya sistema; Russian global navigation satellite system), Galileo (global navigation satellite system currently being built by the European Union (EU) and European Space Agency (ESA)), IRNSS (autonomous regional satellite navigation system being developed by the Indian Space Research Organisation (ISRO)) or Beidou-2 (a Chinese satellite navigation system). The position sensor PS1 may be adapted to provide absolute location data in a form of x-values, y-values and preferably also z-values to the processing unit BS-PU.

The orientation sensor OS1 may be for example an absolute orientation sensor for measuring angular rate, acceleration and geomagnetic fields preferably in three perpendicular axes. The orientation sensor OS1 may be adapted to provide absolute orientation data in a form of azimuth angles and elevation angles to the processing unit BS-PU. In an alternative embodiment, the orientation sensor OS1 may provide relative data for an amount of a change of the azimuth angle and an amount of a change of the elevation angle to the processing unit BS-PU and the processing unit BS-PU which may be has stored previous absolute values of the azimuth angle and the elevation angle is adapted to calculate a new azimuth angle and a new elevation angle based on the stored previous absolute values and the newly received relative data.

Figure 4 shows a flow diagram of a method MET1-NN2 of the mobile station MS1 for configuring the radio frequency transmission between the first highly directional antenna NN1-AA connected to the base station CBS and the second highly directional antenna of the mobile station MS1.

In a first step M1, the mobile station MS1 determines a location of the mobile station MS1 and an orientation of the mobile station MS1. Because of the co-location of the mobile station MS1 and the second highly directional antenna preferably in a same housing a location and orientation of the mobile station MS1 is the same as a location and an orientation of the second highly directional antenna.

The location of the mobile station MS1 may be for example measured by a position sensor as part of the mobile station MS1. Alternatively, the location of the mobile station MS1 may be done by other localization methods such as AGPS (AGPS = Assisted GPS) or the so-called iBeacon indoor positioning system which has been introduced by Apple Inc.

The location of the mobile station MS1 may be for example provided in a same format as the x values and the y values or as the x values, the y values and the z values, which are given above with respect to the tables 1, 2 and 3. The orientation of the second highly directional antenna may be represented for example also by the electrical boresight and may be preferably measured by an orientation sensor as part of the mobile station MS1. The orientation of the second highly directional antenna may be for example provided in a same format as the azimuth angles and the elevation angles, which are given above with respect to the tables 1, 2 and 3.

In a next step M2, the mobile station MS1 transmits the second location information to the base station CBS via the second wireless link LFL1 using the second frequency range. The second wireless link LFL1 may be for example a cellular band of a radio access technology such as UMTS or LTE. Alternatively, the second wireless link LFL1 may be based on one of the radio access technologies which are described with respect to the radio access network RAN1 which is shown in Figure 1.

The second location information may contain for example an x value and a y value of the current location of the mobile station MS1 or the x value, the y values and a z value of the current location. Alternatively, the mobile station MS1 transmits the second location information and the second orientation information and preferably the second antenna type information about the antenna type of the second highly directional antenna to the base station CBS via the second wireless link LFL1 using the second frequency range. The second orientation information contains an azimuth value and an elevation value of the current orientation of the mobile station MS1. The second antenna type information may contain an identifier for the antenna type being used for the second highly directional antenna at the mobile station MS1.

By a further step M3, the mobile station MS1 receives the second initial beam parameters from the base station CBS via the second wireless link LFL1.

In a next optional step M4 when the second initial beam parameters contain a beam direction for the radiation beam TB-MS to be applied at the second highly directional antenna, the mobile station MS1 determines beamforming weights for the uplink transmission from the second highly directional antenna as the second initial beam parameters based on an equation similar to the equation (3).

In a next step M5, the mobile station MS1 applies the second initial beam parameters such as beamforming weights determined by the step M4 or received by the step M3 for obtaining a corresponding antenna pattern at the second highly directional antenna for the uplink transmission from the second highly directional antenna.

In a further optional step M6, the mobile station MS1 determines second optimized beam parameters for the radiation beam TB-MS1 of the second highly directional antenna. The determination of the second optimized beam parameters may be obtained for example in a following way: Further differently pre-coded pilot signals, which represent different beam directions in the vicinity of the initial beam direction of the second highly directional antenna may be transmitted in uplink direction during a training phase from the mobile station MS1 to the base station CBS. The base station CBS may measure receive powers of the further differently pre-coded pilot signals and may report corresponding receive power values to the mobile station MS1 via the first wireless link HFL1 or the second wireless link LFL1. The mobile station MS1 may select and determine new beamforming weights as second optimized beam parameters for the radiation beam of the second highly directional antenna for that pre-coding for which a maximum receive power has been reported from the base station CBS. This method may be similar or equal to the method as described with respect to the step S8 of the method MET1-NN1 which is executed by the base station CBS.

In a next optional step M7, the mobile station MS1 preferably applies the second optimized beam parameters for obtaining an optimized beam direction of the radiation beam TB-MS1 of the second highly directional antenna preferably by applying directly the beamforming weights as selected in the previous step M6.

By a further optional step M8, the mobile station MS1 transmits information of the second optimized beam parameters to the base station CBS via the first wireless link HFL1 or the second wireless link LFL1 so that the base station CBS is able to store the second optimized beam parameters in the database BS-DB. The procedure for determining, applying and transmitting information of the second optimized beam parameters may be repeated, when required.

Figure 5 shows schematically an exemplarily block diagram of the mobile station MS. The mobile station MS may be the mobile station MS1 as shown in Figure 1 or the mobile station MS2 as shown in Figures 6a and 6b. The mobile station MS contains a first transceiver MS-TRC-AA for transmitting the uplink radio frequency signals in the first frequency range via the second highly directional antenna NN2-AA and for receiving the downlink radio frequency signals in the first frequency range via the second highly directional antenna NN2-AA, a second transceiver MS-TRC-A for transmitting the uplink radio frequency signals in the second frequency range via a further antenna MS-A and for receiving the downlink radio frequency signals in the second frequency range via the further antenna MS-A and a processing module or processing unit MS-PU which is internally connected to the first transceiver unit MS-TRC-AA and the second transceiver unit MS-TRC-A and which controls the first transceiver unit MS-TRC-AA and the second transceiver unit MS-TRC-A.

The mobile station MS further contains the antenna system A-MS. The antenna system A-MS contains the second highly directional antenna NN2-AA and the further antenna MS-A. The second highly directional antenna NN2-AA may be for example a rectangular planar antenna array which contains 36 antenna elements in a 6 x 6 arrangement. Alternatively, the rectangular planar antenna array may contain for example 25 antenna elements in a 5 x 5 arrangement, 40 antenna elements in a 8 x 5 arrangement (8 columns and 5 rows), 50 antenna elements in a 5 x 10 arrangement (5 columns and 10 rows) or 64 antenna elements in a 8 x 8 arrangement. Certainly, antenna arrays with further number of antenna elements in further arrangements of columns and rows may be used for the second highly directional antenna NN2-AA. The further antenna MS-A may be an antenna with a single antenna element or also a MIMO antenna array with for example 2 antenna elements in a 2 x 1 or 1 x 2 arrangement.

The mobile station MS further contains a position sensor PS2 which is connected to the processing unit MS-PU and which may be of a same type as the position sensor PS1 of the antenna system A-CBS. The mobile station MS even further contains an orientation sensor OS2 which is also connected to the processing unit MS-PU and which may be of a same type as the orientation sensor OS1 of the antenna system A-CBS. Alternatively, the sensors PS2 and OS2 may be of different type in comparison to the sensors PS1 and OS1 and may be miniaturized sensors which are adapted for being installed in a small size housing of the mobile station MS.

Figure 6a shows schematically a block diagram of a cellular radio access network RAN2 which contains a base station CBS1 for radio frequency transmission in the second frequency range within a radio cell RC2, a first base station MMWBS1 adapted for radio frequency transmission in the first frequency range within a radio cell RC3 and a second base station MMWBS2 adapted for radio frequency transmission in the first frequency range within a radio cell RC4. The cellular radio access network RAN2 may be based on one of the radio access technologies which are described with respect to the radio access network RAN1 which is shown in Figure 1.

The base station CBS1 is connected via a fixed or wireless backhaul link BHL2 to a further base station or to a network node of a core network of a cellular mobile communication system and contains a co-located or remotely connected antenna system A-CBS1, which is adapted for a wireless communication via a second wireless link LFL2 in the second frequency range and which may be further adapted for a wireless communication with the first base station MMWBS1 via a fixed or wireless backhaul link BHL3 and the second base station MMWBS2 via a fixed or wireless backhaul link BHL4 for exchanging user data and signaling information. The wireless backhaul links BHL3, BHL4 may apply radio frequency transmission based on a radio access technology such as UMTS or LTE. The fixed backhaul links BHL3, BHL4 may apply a transmission technology such as wireline transmission (e.g. fiber transmission, coax or DSL-like transmission) or wireless point to point transmission.

The first base station MMWBS1 and the second base station MMWBS2 may be slave base stations and may be controlled by the base station CBS1 as a master base station. This means that the base station CBS1 may for example decide about a usage of radio resources within the radio cell RC3 and the radio cell RC4 or may decide which mobile stations shall be served by which one of the base stations MMWBS1, MMWBS2.

The cellular radio access network RAN2 further contains a mobile station MS2 within a coverage area of radio cell RC3. The mobile station MS2 contains the antenna system A-MS as described above with respect to Figure 5. This means that the mobile station MS2 is adapted to exchange user data and signaling with the first base station MMWBS1 via a first wireless link HFL2 which applies radio frequency signals in the first frequency range and to exchange signaling data with the base station CBS1 via a second wireless link LFL2 which applies radio frequency signals in the second frequency range.

The first base station MMWBS1 contains an antenna system A-MMWBS1 which is a highly directional antenna for the first frequency range. In a same way the second base station MMWBS2 contains an antenna system A-MMWBS2 which is also a highly directional antenna. Further information with respect to the first base station MMWBS1 and the second base station MMWBS1 is given with respect to Figure 9.

The base station CBS1 determines the first initial beam parameters for the antenna system A-MMWBS1 and second initial beam parameters for the mobile station MS2 based on a location and an orientation of the antenna system A-MMWBS1 and based on a location and an orientation of the mobile station MS2 for adjusting a direction of a radiation beam TB1-MMWBS1 at the antenna system A-MMWBS1 and a direction of a radiation beam TB1-MS at the mobile station MS2 for the first wireless link HFL2.

In a same way, the base station CBS1 determines the first initial parameters for the antenna system A-MMWBS2 and the second initial beam parameters for a mobile station served by the second base station MMWBS2.

The second wireless link LFL2 using the second frequency range is applied for signalling the second location information of the mobile station MS1 or for signalling the second location information and the second orientation information of the mobile station MS1 to the base station CBS1, which uses the second location information or the second location information and the second orientation information and the first location information for determining the second initial beam parameters to be applied at the antenna system A-MS of the mobile station MS2 for adjusting the radiation beam TB1-MS for a wireless communication between the first base station MMWBS1 and the mobile station MS2 via the first wireless link HFL2 in the first frequency range. The second wireless link LFL2 is further applied for signalling the second initial beam parameters to be applied at the antenna system A-MS from the base station CBS1 to the mobile station MS2.

In principle, the first initial beam parameters and the second initial beam parameters may be determined or may be retrieved from a local or central database for an assumption of an LOS transmission path between the antenna system A-MMWBS1 and the mobile station MS2. It may happen relatively often that an obstacle OBST such as a house, a lorry, a hill etc. may be located between the first base station MMWBS1 and the mobile station MS2 and the obstacle OBST may disturb the LOS transmission path to a large extend or may even prevent the LOS transmission path. In such a case an alternative transmission path ATP may determined as shown with respect to Figure 6b. A procedure for determining the alternative transmission path for the first wireless link HFL2 may be similar to the steps S8/S9 of the method MET1-NN1 (see Figure 2) for the first base station MMWBS1 and to the steps M6/M7 of the method MET1-NN2 (see Figure 4) for the mobile station MS2. By transmitting differently pre-coded pilot signals, which represent different beam directions in the vicinity of the initial beam direction of the first highly directional antenna or the second highly directional antenna during a training phase some of the pilot signals may be reflected by an object such as a building, a hill, a mountain etc. in such a way, that much more electromagnetic power is received by a counterpart network node (first base station MMWBS1 or mobile station MS2) of the transmitting network node via the alternative transmission path than with the LOS transmission path. Each of the network nodes (the first base station MMWBS1 and the mobile station MS2) may select and determine new beamforming weights as optimized beam parameters for a new radiation beam TB2-MMWBS1 at the first highly directional antenna of the first base station MMWBS1 and for a new radiation beam TB2-MS at the second highly directional antenna of the mobile station MS2. The new beamforming weigths or the new beam directions may be reported as first optimized beam parameters and second optimized beam parameters from the first base station MMWBS1 and the mobile station MS2 to the base station CBS1 for storing in the local or central database for later usage.

Figure 7 shows a flow diagram of a method MET2-NN1 of the base station CBS1 for configuring radio frequency transmission between the first highly directional antenna connected to the first base station MMWBS1 and the second highly directional antenna of the mobile station MS2. The elements in Figure 7 that correspond to elements of Figure 2 have been designated by same reference numerals and in general are not described again for simplification.

In a further step S1a, the base station CBS1 controls one or several of the base stations MMWBS1, MMWBS2. As already described above, the base station CBS1 may for example decide about a usage of radio resources within the radio cell RC3 and the radio cell RC4 or may decide which mobile stations shall be served by which one of the base stations MMWBS1, MMWBS2.

By a next step S1b before the step S1, the base station CBS1 may select for example based on a request received from the mobile station MS2 by a radio frequency transmission in the second frequency range one of the base stations MMWBS1, MMWBS2 for serving the mobile station MS2 with user data by applying radio frequency signals in the first frequency range. The selection may depend for example on location information received from the mobile station MS2 via the second wireless link LFL2 or on a determination of distances between the mobile station MS2 and the base stations MMWBS1, MMWBS2 based on location information of the base stations MMWBS1, MMWBS2 and the mobile station MS2.

In a further optional step S2a as an alternative to the step S2 (the first location information, the first orientation information and preferably the first antenna type information of the first highly directional antenna of the base station MMWBS1 is stored at the local database of the base station CBS2 and may be retrieved by the step S3 from the local database), the base station CBS1 receives from the selected base station MMWBS1 via the backhaul link BHL3 the first location information about the location of the first highly directional antenna or receives from the base station CBS1 via the backhaul link BHL3 the first location information and the first orientation information about the orientation of the first highly directional antenna of the first base station MMWBS1. Preferably, also the first antenna type information of the first highly directional antenna may be received by the base station CBS1.

The base station CBS1 may request for example from the base station MMWBS1 the first location information or the first location information and the first orientation information and preferably the first antenna type information at a beginning of a wireless communication between the first base station MMWBS1 and the mobile station MS2 via the first wireless link HFL2.

In a further step S6a after the step S6, the base station CBS1 transmits the first initial beam parameters being determined by the step S5 to the first base station MMWBS1 for being applied at the first highly directional antenna of the first base station MMWBS1.

In a further optional step S8a after the step S6a and before the step S10, the base station CBS1 receives from the base station MMWBS1 via the backhaul link BHL3 the first optimized beam parameters such as optimized beamforming weights as being applied at the first highly directional antenna of the base station MMWBS1 for obtaining an optimized beam direction of the radiation beam TB2-MMWBS1, e.g. for the case as described above, when the LOS transmission path is not available or not suitable for achieving a sufficient high data rate.

Figure 8 shows schematically an exemplarily block diagram of the base station CBS1. The elements in Figure 8 that correspond to elements of Figure 3 have been designated by same reference numerals and in general are not described again for simplification.

The base station CBS1 contains the local database BS-DB, the second transceiver BS-TRC-A and the third transceiver BS-TRC-BHL. The base station CBS1 further contains a first transceiver BS-TRC-A2 for enabling the backhaul links BHL3, BHL4. With respect to Figure 8, the backhaul links BHL3, BHL4 may be wireless backhaul links, which are served by an antenna CBS1-A2 which is connected to the first transceiver BS-TRC-A2.

The base station CBS1 further contains a processing module or processing unit CBS1-PU which is internally connected to the database BS-DB, the first transceiver BS-TRC-A2, the second transceiver BS-TRC-A and the third transceiver BS-TRC-BHL and which operates and controls the database BS-DB, the first transceiver BS-TRC-A2, the second transceiver BS-TRC-A and the third transceiver BS-TRC-BHL. The processing unit CBS1-PU is further adapted for determining the first initial beam parameters and the second initial beam parameters.

The base station CBS1 may further contain the antenna system A-CBS1 when co-located to the base station CBS1 or the antenna system A-CBS1 may be regarded as a separate unit when remotely connected to the base station CBS1. The antenna system A-CBS1 contains the antenna CBS-A and the antenna CBS1-A2. The antenna CBS1-A2 may contain a single antenna element or may be a MIMO antenna with two, four or more antenna elements. Embodiments for the antenna CBS-A have been already explained above with respect to Figure 3.

Figure 9 shows schematically an exemplarily block diagram of a base station MMWBS which may be for example the first base station MMWBS1 or the second base station MMWBS2 as shown in Figures 6a and 6b. The elements in Figure 9 that correspond to elements of Figure 3 have been designated by same reference numerals and in general are not described again for simplification.

The base station MMWBS contains the first transceiver BS-TRC-AA and a second transceiver BS-TRC-ANT which is connected to an antenna ANT for enabling the wireless backhaul links BHL3, BHL4 to the base station CBS1. The base station MMWBS further contains a processing module or processing unit MMWBS-PU which is internally connected to the first transceiver BS-TRC-AA and the second transceiver BS-TRC-ANT and which operates and controls the first transceiver BS-TRC-AA and the second transceiver BS-TRC-ANT. The processing unit MMWBS-PU may be adapted for determining the first optimized beam parameters and for applying the first initial beam parameters and the first optimized beam parameters at the first highly directional antenna NN1-AA.

The base station MMWBS may further contain the antenna system A-MMWBS when the antenna system A-MMWBS is co-located to the base station MMWBS or the antenna system A-MMWBS may be regarded as a separate unit when remotely connected to the base station MMWBS.

The antenna system A-MMWBS may be the antenna system A-MMWBS1 of the first base station MMWBS1 or the antenna system A-MMWBS2 of the second base station MMWBS2 and contains the first highly directional antenna NN1-AA, the antenna ANT, the position sensor PS1 near or attached to the first highly directional antenna NN1-AA and connected to the processing unit MMWBS-PU and the orientation sensor OS1 which is also connected to the processing unit MMWBS-PU.

Figure 10 shows schematically a block diagram of a cellular radio access network RAN3 which contains a base station CBS2 for radio frequency transmission in the second frequency range within a radio cell RC5 and a further base station CBS3 also for radio frequency transmission in the second frequency range within a radio cell RC6. The cellular radio access network RNA3 may be based on one of the radio access technologies which are described with respect to the radio access network RAN1 which is shown in Figure 1.

The base station CBS2 is connected via a fixed or wireless backhaul link BHL6 to a further base station or to a network node of a core network of a cellular mobile communication system and contains a co-located or remotely connected antenna system A-CBS2, which is adapted for a wireless communication via a wireless backhaul link BHL5 in the first frequency range with the further base station CBS3 and which is further adapted for a wireless communication in the second frequency range with mobile stations which are located within a radio cell RC5 of the base station CBS2. The further base station CBS3 contains a co-located or remotely connected antenna system A-CBS3, which is adapted for a wireless communication via the wireless backhaul link BHL5 in the first frequency range with the base station CBS2 and which is further adapted for a wireless communication in the second frequency range with mobile stations which are located within a radio cell RC6 of the further base station CBS3.

The antenna system A-CBS2 may contain the first highly directional antenna and the base station CBS2 may operate according to the method MET1-NN1 which is described with respect to Figure 2. Thereby, a radiation beam TB-CBS2 of the antenna system A-CBS2 for the backhaul link BHL5 is initialed or optimized.

The antenna system A-CBS3 may contain the second highly directional antenna and the further base station CBS3 may operate according to the method MET1-NN2 which is described with respect to Figure 4. Thereby, a radiation beam TB-CBS3 of the antenna system A-CBS3 for the backhaul link BHL5 is initiated or optimized.

In a preferred embodiment, the first highly directional antenna of the base station CBS2 may be adapted to form multiple beams for multiple wireless backhaul links in the first frequency range to multiple second highly directional antennas of multiple further base stations.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for performing a certain function" shall be understood as functional blocks comprising circuitry that is adapted for performing the certain function, respectively. Hence, a "means for something" may as well be understood as a "means being adapted or suited for something". A means being adapted for performing a certain function does, hence, not imply that such means necessarily is performing said function (at a given time instant).

Functions of various elements shown in the figures, including any functional blocks may be provided through the use of dedicated hardware, as e.g. a processor, as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, DSP hardware, network processor, ASIC, FPGA, read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the detailed description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that the methods MET1-NN1, MET2-NN1, MET1-NN2 disclosed in the specification or in the claims may be implemented by a device having means for performing each of the respective steps of these methods. Preferably, a computer program product may contain computer-executable instructions for performing the methods MET1-NN1, MET2-NN1, MET1-NN2, when the computer program product is executed on a programmable hardware device such as a DSP, an ASIC or an FPGA. Preferably, a digital data storage device may encode a machine-executable program of instructions to perform one of the methods MET1-NN1, MET2-NN1, MET1-NN2.

Further, it is to be understood that the disclosure of multiple steps or functions disclosed in the specification or claims may not be construed as to be within the specific order. Therefore, the disclosure of multiple steps or functions will not limit these to a particular order unless such steps or functions are not interchangeable for technical reasons. Furthermore, in some embodiments a single step may include or may be broken into multiple sub steps. Such sub steps may be included and part of the disclosure of this single step unless explicitly excluded.

## Claims

1. A method (MET1-NN1, MET2-NN1) of a first radio access network node (CBS, CBS1, CBS2) for configuring radio frequency transmission between a first highly directional antenna (NN1-AA) and a second highly directional antenna (NN2-AA) of a second radio access network node (MS1, MMWBS1, MS2, CBS3) in a first frequency range comprising:

   - receiving (S3) second location information of a second location of said second highly directional antenna (NN2-AA) by a radio frequency transmission in a second frequency range with frequencies smaller than frequencies of said first frequency range or by a transmission technology different to said radio frequency transmission,
   - determining (S5) first initial beam parameters for a first antenna pattern to be applied at said first highly directional antenna (NN1-AA) and second initial beam parameters for a second antenna pattern to be applied at said second highly directional antenna (NN2-AA) based on said second location information and based on first location information of a first location of said first highly directional antenna (NN1-AA), and
   - transmitting (S6) information of said second initial beam parameters to said second radio access network node (MS1, MMWBS1, MS2, CBS3) by a further radio frequency transmission in said second frequency range or by said transmission technology.

2. Method (MET1-NN1, MET2-NN1) according to claim 1, wherein said determining (S5) determines either of the following:

   - a first beam direction (TB-CBS, TB1-MMWBS1, TB-CBS2) as said first initial beam parameters and a second beam direction (TB-MS1, TB1-MS2, TB-CBS3) as said second initial beam parameters,
   - first beamforming weights as said first initial beam parameters further based on first orientation information of a first orientation of said first highly directional antenna (NN1-AA) and on first antenna type information of a first antenna type of said first highly directional antenna (NN1-AA) and said second beam direction (BD-MS, BD1-MS, BD-CBS2) as said second initial beam parameters,
   - first beamforming weights as said first initial beam parameters further based on said first orientation information and on said first antenna type information and second beamforming weights as said second initial beam parameters further based on second orientation information of a second orientation of said second highly directional antenna (MS-ANT2) and on second antenna type information of a second antenna type of said second highly directional antenna (NN2-AA), when said method (MET1-NN1, MET2-NN1) further comprises receiving (S3) said second orientation information or said second orientation information and said second antenna information via said second frequency range.

3. Method (MET1-NN1) according to any of the preceding claims, wherein said method (MET1-NN1) further comprises:

   - determining (S2) said first location of said first highly directional antenna (NN1-AA) and said first orientation of said first highly directional antenna (NN1-AA) for obtaining said first location information and said first orientation information, and

- applying (S9) said first initial beam parameters for said first antenna pattern at said first highly directional antenna (NN1-AA).

4. Method (MET2-NN1) according to claim 1 or 2, wherein said method (MET2-NN1) further comprises:

- controlling (S1a) a third radio access network node (MMWBS1) adapted to said radio frequency transmission in said first frequency range,
- receiving (S2a) via a backhaul link (BHL3) said first location information or as a first combination said first location information and said first orientation information or as a second combination said first location information, said first orientation information and said first antenna information from said third radio access network node (MMWBS1), and
- transmitting (S6a) via said backhaul link (BHL3) information of said second initial beam parameters to said third radio access network node (MMWBS1).

5. Method (MET2-NN1) according to claim 4, wherein said controlling (S1b) controls at least one further third radio access network node (MMWBS2) adapted to said radio frequency transmission in said first frequency range and wherein said method (MET2-NN1) further comprises selecting (S1b) one of said at least two third radio access network nodes (MMWBS1, MMWBS2) for said radio frequency transmission in said first frequency range.

6. Method (MET1-NN1, MET2-NN1) according to any of the preceding claims, wherein said method (MET1-NN1, MET2-NN1) further comprises:

- storing (S1) in a database (BS-DB) beam parameters for beam directions to be applied at said first highly directional antenna (NN1-AA) and said second highly directional antenna (NN2-AA) in correlation to a predefined set of locations or to a predefined set of locations and orientations or to a predefined set of locations, orientations and antenna types of said first highly directional antenna (NN1-AA) and said second highly directional antenna (NN2-AA), and
- accessing (S4) said database (BS-DB) for retrieving beam parameters for said first antenna pattern and said second antenna pattern for current locations or for current locations and current orientations or for current locations, current orientations and current antenna types of said first highly directional antenna (NN1-AA) and said second highly directional antenna (NN2-AA),

and wherein said determining (S5) of said first initial beam parameters and of said second initial beam parameters is further based on said retrieved beam parameters.

7. Method (MET1-NN1, MET2-NN1) according to claim 6, wherein said method (MET1-NN1, MET2-NN1) further comprises:

- receiving (S8a) information of first optimized beam parameters for said first antenna pattern to be applied at said first highly directional antenna (NN1-AA) or determining (S8) said first optimized beam parameters for said first antenna pattern to be applied at said first highly directional antenna (NN1-AA), and/or
- receiving (S10) information of second optimized beam parameters for said second antenna pattern to be applied at said second highly directional antenna (NN2-AA), and
- storing (S11) to said database (BS-DB) information of said first optimized beam parameters and/or information of said second optimized beam parameters in correlation to a first current location or to said first current location and a first current orientation or to said first current location, said first current orientation and a first antenna type of said first highly directional antenna (NN1-AA) and in correlation to a second current location or to said second current location and a second current orientation or to said second current location, said second current orientation and a second antenna type of said second highly directional antenna (NN2-AA).

8. Method (MET1-NN1, MET2-NN1) according to any of the preceding claims, wherein said first frequency range comprises frequencies equal to or above 10 GHz and wherein said second frequency range comprises frequencies below 10 GHz.

9. A method (MET1-NN2) of a second radio access network node (MS1, MMWBS1, MS2, CBS3) for configuring radio frequency transmission in a first frequency range between a first highly directional antenna (NN1-AA) and a second highly directional antenna (NN2-AA) comprising:

- determining (M1) a location and an orientation of a highly directional antenna (NN1-AA, NN2-AA) being either said first highly directional antenna (NN1-AA) or said second highly directional antenna (NN2-AA),
- transmitting (M2) location information of said location by a radio frequency transmission in a second frequency range with frequencies smaller than frequencies of said first frequency range or by a transmission technology different to said radio frequency transmission,
- receiving (M3) by a further radio frequency transmission in said second frequency range or by said transmission technology information of initial beam parameters for an antenna pattern to be applied at said highly directional antenna (NN1-AA, NN2-AA), and
- applying (M5) said initial beam parameters for said antenna pattern at said highly directional antenna (NN1-AA, NN2-AA).

10. Method (MET1-NN2) according to claim 9, wherein said method (MET1-NN2) further comprises determining (M4) beamforming weights for said highly directional antenna (NN1-AA, NN2-AA) based on said received initial beam parameters and based on said orientation, when said received initial beam parameters comprise a beam direction (TB-MS1, TB1-MMWBS1, TB1-MS2, TB-CBS3) for said antenna pattern or wherein said beamforming weights are directly applied at said highly directional antenna (NN1-AA, NN2-AA), when said initial beam parameters already comprise said beamforming weights.

11. Method (MET1-NN2) according to any of the preceding claims 9 or 10, wherein said method (MET1-NN2) further comprises determining (M6) optimized parameters for said antenna pattern to be applied at said first highly directional antenna (NN1-AA) or at said second highly directional antenna (NN2-AA) and transmitting (M8) information of said optimized parameters to said first radio access network node (CBS, CBS1, CBS2) for storing said information of said optimized parameters in a database (BS-DB).

12. A first radio access network node (CBS, CBS1, CBS2) for configuring radio frequency transmission between a first highly directional antenna (NN1-AA) and a second highly directional antenna (NN2-AA) of a second radio access network node (MS, CBS3) in a first frequency range comprising:

- means (CBS-CB-REC, CBS-ANT1) for receiving second location information of a second location of said second highly directional antenna (NN2-AA) by a radio frequency transmission in a second frequency range with frequencies smaller than frequencies of said first frequency range or by a transmission technology different to said radio frequency transmission,
- means (CBS-PU, CBS-PU1) for determining first initial beam parameters for a first antenna pattern to be applied at said first highly directional antenna (NN1-AA) and second initial beam parameters for a second antenna pattern to be applied at said second highly directional antenna (NN2-AA) based on said second location information and based on first location information of a first location of said first highly directional antenna (NN1-AA), and
- means (CBS-CB-REC, CBS-ANT1) for transmitting information of said second initial beam parameters to said second radio access network node (MS, CBS3) by a further radio frequency transmission in said second frequency range or by said transmission technology.

13. First radio access network node (CBS, CBS1, CBS2) according to claim 12, wherein said first radio access network node (CBS) is a base station adapted for radio frequency transmission in said first frequency range and for radio frequency transmission in said second frequency range or wherein said first radio access network node (CBS1) is a base station of a cellular mobile radio network controlling at least one base station (MMWBS1, MMWBS2) dedicated for radio frequency transmission in said first frequency range or wherein said first radio access network node (CBS2) is a base station of a cellular mobile radio network connected to a further base station (CBS3) of said cellular mobile radio network via a wireless backhaul link (BHL5) based on said radio frequency transmission via said first frequency range.

14. A second radio access network node (MS, CBS3) for configuring radio frequency transmission in a first frequency range between a first highly directional antenna (NN1-AA) and a second highly directional antenna (NN2-AA) comprising:

- means (PS1, OS1, PS2, OS2) for determining a location and an orientation of a highly directional antenna (NN1-AA, NN2-AA) being either said first highly directional antenna (NN1-AA) or said second highly directional antenna (NN2-AA),
- means (MS-TRCA-A, MS-1, BS-TRC-ANT, ANT) for transmitting location information of said location to a first radio access network node (CBS, CBS1, CBS2) by a radio frequency transmission in a second frequency range with frequencies smaller than frequencies of said first frequency range or by a transmission technology different to said radio frequency transmission and for receiving by a further radio frequency transmission in said second frequency range or by said transmission technology information of initial beam parameters for an antenna pattern to be applied at said highly directional antenna (NN1-AA, NN2-AA), and
- means (MS-PU, MMWBS-PU) for applying said initial beam parameters for said antenna pattern at said highly directional antenna (NN1-AA, NN2-AA).

15. Second radio access network node (MS1, MMWBS, MMWBS1, MS2, CBS3) according to claim 14, wherein said second radio access network node is a mobile station (MS1, MS2) or a base station (MMWBS, MMWBS1) controlled by a further base station (CBS1) or a base station (CBS3) of a cellular mobile radio network connected to a further base station (CBS2) via a wireless backhaul link (BHL5) based on said radio frequency transmission via said first frequency range.

**Amended claims in accordance with Rule 137(2) EPC.**

1. A method (MET1-NN1, MET2-NN1) of a first radio access network node (CBS, CBS1, CBS2) for configuring radio frequency transmission between a first highly directional antenna (NN1-AA) and a second highly directional antenna (NN2-AA) of a second radio access network node (MS1, MMWBS1, MS2, CBS3) in a first frequency range comprising:

   - receiving (S3) second location information of a second location of said second highly directional antenna (NN2-AA) by a radio frequency transmission in a second frequency range with frequencies smaller than frequencies of said first frequency range or by a transmission technology different to said radio frequency transmission,
   - determining (S5) first initial beam parameters for a first antenna pattern to be applied at said first highly directional antenna (NN1-AA) and second initial beam parameters for a second antenna pattern to be applied at said second highly directional antenna (NN2-AA) based on said second location information and based on first location information of a first location of said first highly directional antenna (NN1-AA), and
   - transmitting (S6) information of said second initial beam parameters to said second radio access network node (MS1, MMWBS1, MS2, CBS3) by a further radio frequency transmission in said second frequency range or by said transmission technology.

2. Method (MET1-NN1, MET2-NN1) according to claim 1, wherein said determining (S5) determines either of the following:

   - a first beam direction (TB-CBS, TB1-MMWBS1, TB-CBS2) as said first initial beam parameters and a second beam direction (TB-MS1, TB1-MS2, TB-CBS3) as said second initial beam parameters,
   - first beamforming weights as said first initial beam parameters further based on first orientation information of a first orientation of said first highly directional antenna (NN1-AA) and on first antenna type information of a first antenna type of said first highly directional antenna (NN1-AA) and said second beam direction (BD-MS, BD1-MS, BD-CBS2) as said second initial beam parameters,
   - first beamforming weights as said first initial beam parameters further based on said first orientation information and on said first antenna type information and second beamforming weights as said second initial beam parameters further based on second orientation information of a second orientation of said second highly directional antenna (MS-ANT2) and on second antenna type information of a second antenna type of said second highly directional antenna (NN2-AA), when said method (MET1-NN1, MET2-NN1) further comprises receiving (S3) said second orientation information or said second orientation information and said second antenna information via said second frequency range.

3. Method (MET1-NN1) according to any of the preceding claims, wherein said method (MET1-NN1) further comprises:

   - determining (S2) said first location of said first highly directional antenna (NN1-AA) and said first orientation of said first highly directional antenna (NN1-AA) for obtaining said first location information and said first orientation information, and
   - applying (S7) said first initial beam parameters for said first antenna pattern at said first highly directional antenna (NN1-AA).

4. Method (MET2-NN1) according to claim 1 or 2, wherein said method (MET2-NN1) further comprises:

- controlling (S1a) a third radio access network node (MMWBS1) adapted to said radio frequency transmission in said first frequency range,
- receiving (S2a) via a backhaul link (BHL3) said first location information or as a first combination said first location information and said first orientation information or as a second combination said first location information, said first orientation information and said first antenna information from said third radio access network node (MMWBS1), and
- transmitting (S6a) via said backhaul link (BHL3) information of said second initial beam parameters to said third radio access network node (MMWBS1).

5. Method (MET2-NN1) according to claim 4, wherein said controlling (S1b) controls at least one further third radio access network node (MMWBS2) adapted to said radio frequency transmission in said first frequency range and wherein said method (MET2-NN1) further comprises selecting (S1b) one of said at least two third radio access network nodes (MMWBS1, MMWBS2) for said radio frequency transmission in said first frequency range.

6. Method (MET1-NN1, MET2-NN1) according to any of the preceding claims, wherein said method (MET1-NN1, MET2-NN1) further comprises:

- storing (S1) in a database (BS-DB) beam parameters for beam directions to be applied at said first highly directional antenna (NN1-AA) and said second highly directional antenna (NN2-AA) in correlation to a predefined set of locations or to a predefined set of locations and orientations or to a predefined set of locations, orientations and antenna types of said first highly directional antenna (NN1-AA) and said second highly directional antenna (NN2-AA), and
- accessing (S4) said database (BS-DB) for retrieving beam parameters for said first antenna pattern and said second antenna pattern for current locations or for current locations and current orientations or for current locations, current orientations and current antenna types of said first highly directional antenna (NN1-AA) and said second highly directional antenna (NN2-AA),
and wherein said determining (S5) of said first initial beam parameters and of said second initial beam parameters is further based on said retrieved beam parameters.

7. Method (MET1-NN1, MET2-NN1) according to claim 6, wherein said method (MET1-NN1, MET2-NN1) further comprises:

- receiving (S8a) information of first optimized beam parameters for said first antenna pattern to be applied at said first highly directional antenna (NN1-AA) or determining (S8) said first optimized beam parameters for said first antenna pattern to be applied at said first highly directional antenna (NN1-AA), and/or
- receiving (S10) information of second optimized beam parameters for said second antenna pattern to be applied at said second highly directional antenna (NN2-AA), and
- storing (S11) to said database (BS-DB) information of said first optimized beam parameters and/or information of said second optimized beam parameters in correlation to a first current location or to said first current location and a first current orientation or to said first current location, said first current orientation and a first antenna type of said first highly directional antenna (NN1-AA) and in correlation to a second current location or to said second current location and a second current orientation or to said second current location, said second current orientation and a second antenna type of said second highly directional antenna (NN2-AA).

8. Method (MET1-NN1, MET2-NN1) according to any of the preceding claims, wherein said first frequency range comprises frequencies equal to or above 10 GHz and wherein said second frequency range comprises frequencies below 10 GHz.

9. A method (MET1-NN2) of a second radio access network node (MS, MS1, MS2, MMWBS, MMWBS1, MMWBS2, CBS3) for configuring radio frequency transmission in a first frequency range between a first highly directional antenna (NN1-AA) and a second highly directional antenna (NN2-AA) comprising:

- determining (M1) a location and an orientation of a highly directional antenna (NN1-AA, NN2-AA) being either said first highly directional antenna (NN1-AA) or said second highly directional antenna (NN2-AA),
- transmitting (M2) location information of said location by a radio frequency transmission in a second frequency range with frequencies smaller than frequencies of said first frequency range or by a transmission technology different to said radio frequency transmission,
- receiving (M3) by a further radio frequency transmission in said second frequency range or by said transmission technology information of initial beam parameters for an antenna pattern to be applied at said highly directional antenna (NN1-AA, NN2-AA), and
- applying (M5) said initial beam parameters for said antenna pattern at said highly directional antenna (NN1-AA, NN2-AA).

10. Method (MET1-NN2) according to claim 9, wherein said method (MET1-NN2) further comprises determining (M4) beamforming weights for said highly directional antenna (NN1-AA, NN2-AA) based on said received initial beam parameters and based on said orientation, when said received initial beam parameters comprise a beam direction (TB-MS1, TB1-MMWBS1, TB1-MS2, TB-CBS3) for said antenna pattern or wherein said beamforming weights are directly applied at said highly directional antenna (NN1-AA, NN2-AA), when said initial beam parameters already comprise said beamforming weights.

11. Method (MET1-NN2) according to any of the preceding claims 9 or 10, wherein said method (MET1-NN2) further comprises determining (M6) optimized parameters for said antenna pattern to be applied at said first highly directional antenna (NN1-AA) or at said second highly directional antenna (NN2-AA) and transmitting (M8) information of said optimized parameters to said first radio access network node (CBS, CBS1, CBS2) for storing said information of said optimized parameters in a database (BS-DB).

12. A first radio access network node (CBS, CBS1, CBS2) for configuring radio frequency transmission between a first highly directional antenna (NN1-AA) and a second highly directional antenna (NN2-AA) of a second radio access network node (MS, CBS3) in a first frequency range comprising:

- means (CBS-CB-REC, CBS-ANT1) for receiving second location information of a second location of said second highly directional antenna (NN2-AA) by a radio frequency transmission in a second frequency range with frequencies smaller than frequencies of said first frequency range or by a transmission technology different to said radio frequency transmission,
- means (CBS-PU, CBS-PU1) for determining first initial beam parameters for a first antenna pattern to be applied at said first highly directional antenna (NN1-AA) and second initial beam parameters for a second antenna pattern to be applied at said second highly directional antenna (NN2-AA) based on said second location information and based on first location information of a first location of said first highly directional antenna (NN1-AA), and
- means (CBS-CB-REC, CBS-ANT1) for transmitting information of said second initial beam parameters to said second radio access network node (MS, CBS3) by a further radio frequency transmission in said second frequency range or by said transmission technology.

13. First radio access network node (CBS, CBS1, CBS2) according to claim 12, wherein said first radio access network node (CBS) is a base station adapted for radio frequency transmission in said first frequency range and for radio frequency transmission in said second frequency range or wherein said first radio access network node (CBS1) is a base station of a cellular mobile radio network controlling at least one base station (MMWBS1, MMWBS2) dedicated for radio frequency transmission in said first frequency range or wherein said first radio access network node (CBS2) is a base station of a cellular mobile radio network connected to a further base station (CBS3) of said cellular mobile radio network via a wireless backhaul link (BHL5) based on said radio frequency transmission via said first frequency range.

14. A second radio access network node (MS, MS1, MS2, MMWBS, MMWBS1, MMWBS2, CBS3) for configuring radio frequency transmission in a first frequency range between a first highly directional antenna (NN1-AA) and a second highly directional antenna (NN2-AA) comprising:

- means (PS1, OS1, PS2, OS2) for determining a location and an orientation of a highly directional antenna (NN1-AA, NN2-AA) being either said first highly directional antenna (NN1-AA) or said second highly directional antenna (NN2-AA),
- means (MS-TRCA-A, MS-1, BS-TRC-ANT, ANT) for transmitting location information of said location to a first radio access network node (CBS, CBS1, CBS2) by a radio frequency transmission in a second frequency range with frequencies smaller than frequencies of said first frequency range or by a transmission technology different to said radio frequency transmission and for receiving by a further radio frequency transmission in said second frequency range or by said transmission technology information of initial beam parameters for an antenna pattern to be applied at said highly directional antenna (NN1-AA, NN2-AA), and
- means (MS-PU, MMWBS-PU) for applying said initial beam parameters for said antenna pattern at said highly directional antenna (NN1-AA, NN2-AA).

15. Second radio access network node (MS, MS1, MMWBS, MMWBS1, MMWBS2, MS2, CBS3) according to claim 14, wherein said second radio access network node is a mobile station (MS, MS1, MS2) or a base station (MMWBS, MMWBS1, MMWBS2) controlled by a further base station (CBS1) or a base station (CBS3) of a cellular mobile radio network connected to a further base station (CBS2) via a wireless backhaul link (BHL5) based on said radio frequency transmission via said first frequency range.

FIG. 1

MET1-NN1 〜 ( START )

S1 | Storing in a database beam parameters for a predefined set of locations/orientations

S2 | Determining first location/orientation of first highly directional antenna

S3 | Receiving second location/orientation information of second highly directional antenna

S4 | Accessing database for retrieving beam parameters

S5 | Determining first initial beam parameters and second initial beam parameters

S6 | Transmitting information of second initial beam parameters to second radio access network node

S7 | Applying first initial beam parameters at first highly directional antenna

S8 | Determining first optimized beam parameters

S9 | Applying first optimized beam parameters at first highly directional antenna

S10 | Receiving information of second optimized beam parameters

S11 | Storing information of first and/or second optimized beam parameters to database

FIG. 2          ( END )

FIG. 3

MET1-NN2 ⟍  ( START )

M1 | Determining second location/orientation of second highly directional antenna

M2 | Transmitting second location/orientation information of second highly directional antenna

M3 | Receiving information of second initial beam parameters

M4 | Determining beamforming weights for second highly directional antenna

M5 | Applying second initial beam parameters at second highly directional antenna

M6 | Determining second optimized beam parameters

M7 | Applying second optimized beam parameters at second highly directional antenna

M8 | Transmitting information of second optimized beam parameters

( END )

*FIG. 4*

MS

MS-A

OS2

MS-TRC-A

A-MS

MS-PU

NN2-AA

PS2

MS-TRC-AA

**FIG. 5**

*FIG. 6a*

FIG. 6b

MET2-NN1 　　　START

S1a | Controlling at least two third radio access network nodes

S1b | Selecting one of the least two third radio access network nodes for data transmission

S1

S2a | Requesting/receiving first location/orientation information of selected first highly directional antenna

S3 　→　 S4

S5 　→　 S6

S6a | Transmitting information of first initial beam parameters to selected third radio access network node

S8a | Receiving information of first refined beam parameters

S10 　→　 S11

END

*FIG. 7*

CBS1

CBS-A

BS-TRC-A

BS-DB — CBS1-PU

BS-TRC-BHL    BS-TRC-A2

CBS1-A2

A-CBS1

FIG. 8

MMWBS

BS-TRC-ANT

MMWBS-PU

BS-TRC-AA

ANT

NN1-AA

PS1

OS1

A-MMWBS

FIG. 9

*FIG. 10*

Europäisches
Patentamt

European
Patent Office

Office européen
des brevets

# EUROPEAN SEARCH REPORT

Application Number

EP 14 30 5078

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 498 414 A1 (NEC CORP [JP]) 12 September 2012 (2012-09-12) * paragraphs [0052], [0056]; figure 1A * | 1-15 | INV. H04B7/06 H04B7/08 |
| A | WO 2012/158045 A2 (RADIONOR COMM AS [NO]; SAEGROV ATLE [NO]; KAMBEN ROGER [NO]) 22 November 2012 (2012-11-22) * page 2, lines 23-34 * * page 4, lines 16-25; figures 2,3,6 * | 1-15 | |
| A | US 2012/014367 A1 (CAILLERIE ALAIN [FR] ET AL) 19 January 2012 (2012-01-19) * paragraphs [0090] - [0115]; figure 4 * | 1-15 | |
| A | US 2013/072244 A1 (JEONG SU-RYONG [KR] ET AL) 21 March 2013 (2013-03-21) * paragraphs [0059], [0073], [0082]; figures 2,6 * | 1-15 | |
| A | US 2010/215027 A1 (LIU YONG [US] ET AL) 26 August 2010 (2010-08-26) * paragraph [0062]; figures 3,7-12 * | 1-15 | TECHNICAL FIELDS SEARCHED (IPC) H04B |

The present search report has been drawn up for all claims

| Place of search | Date of completion of the search | Examiner |
|---|---|---|
| Munich | 31 July 2014 | Ernst, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 14 30 5078

This annex lists the patent family members relating to the patent documents cited in  the above-mentioned European search report.
The members are as contained in the European Patent Office EDP file on
The European Patent Office is in no way liable for these particulars which are merely given for the purpose of information.

31-07-2014

| Patent document cited in search report | | Publication date | Patent family member(s) | | Publication date |
|---|---|---|---|---|---|
| EP 2498414 | A1 | 12-09-2012 | CN | 102598533 A | 18-07-2012 |
| | | | EP | 2498414 A1 | 12-09-2012 |
| | | | US | 2012220238 A1 | 30-08-2012 |
| | | | WO | 2011055535 A1 | 12-05-2011 |
| WO 2012158045 | A2 | 22-11-2012 | AR | 086420 A1 | 11-12-2013 |
| | | | EP | 2710400 A2 | 26-03-2014 |
| | | | NO | 334170 B1 | 30-12-2013 |
| | | | US | 2014105054 A1 | 17-04-2014 |
| | | | WO | 2012158045 A2 | 22-11-2012 |
| US 2012014367 | A1 | 19-01-2012 | NONE | | |
| US 2013072244 | A1 | 21-03-2013 | US | 2013072244 A1 | 21-03-2013 |
| | | | WO | 2013039355 A2 | 21-03-2013 |
| US 2010215027 | A1 | 26-08-2010 | US | 2010215027 A1 | 26-08-2010 |
| | | | US | 2013329718 A1 | 12-12-2013 |
| | | | WO | 2010099040 A1 | 02-09-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **H. L. VAN TREES.** Optimum Array Processing: Part IV of Detection, Estimation and Modulation Theory. John Wiley & Sons, 2002